# EUROPÄISCHE PATENTANMELDUNG

(11) **EP 1 515 383 A2**
(43) Veröffentlichungstag der Anmeldung: **16.03.2005**
(21) Anmeldenummer: 04021360.5
(22) Anmeldetag: 08.09.2004
(51) Int. Cl.: H01M 8/04, H01M 8/02

(54) **Vorrichtung zum Beströmen wenigstens einer Brennstoffzelle mit einem Medium sowie Brennstoffzellensystem**

(30) Priorität: 15.09.2003 DE 10342470
(71) Anmelder: P 21-Power for the 21st Century GmbH, 85649 Brunnthal (DE)
(72) Erfinder: Lisgaras, Grigorios, 81547 München (DE); Alonso Nogueiro, Miquel Angel, 80337 München (DE)
(74) Vertreter: Müller, Thomas, Dipl.-Ing.

(57) **Zusammenfassung**

Es wird unter anderem beschrieben eine Vorrichtung (30) zum Beströmen wenigstens einer Brennstoffzelle mit einem Medium, wobei die Brennstoffzelle(n) Bestandteil von Brennstoffzellenstacks (11, 12) eines Brennstoffzellensystem (10) sein kann/können. Die Vorrichtung (30) weist wenigstens eine Medienzufuhr zum Zuführen des Mediums zu den Brennstoffzellen auf sowie wenigstens eine in der Medienzufuhr angeordneten Fördereinrichtung (50) zum Erzeugen eines definierten Medium-Volumenstroms mit einer definierten Strömungsrichtung. Die Medienzufuhr mündet in einen Verteilerraum (33), in dem sich das Medium vor Eintritt in die Brennstoffzellen verteilen kann. Der Verteilerraum (33) ist unmittelbar mit den Brennstoffzellen in Kontakt bringbar, sodass der Eintritt des Mediums in die Brennstoffzellen über einen vorgegebenen Bereich der Brennstoffzellen erfolgen kann. Um eine besonders gleichmäßige Beströmung zu erreichen, ist erfindungsgemäß vorgesehen, dass die Vorrichtung derart ausgebildet ist, dass das Medium über die gesamte Länge des Verteilerraums (33) mit einer definierten Strömungscharakteristik gerichtet in dem vorgegebenen Bereich in die Brennstoffzelle(n) eintritt/eintreten kann und dass in einem Eintrittsbereich (35) des Verteilerraums (33) Mittel zur definierten Verteilung des Medium-Volumenstroms in den Verteilerraum (33) vorgesehen sind.. Weiterhin wird ein entsprechend verbessertes Brennstoffzellensystem (10) beschrieben.

## Beschreibung

Die vorliegende Erfindung betrifft zunächst eine Vorrichtung zum Beströmen wenigstens einer Brennstoffzelle mit einem Medium gemäß dem Oberbegriff von Patentanspruch 1. Weiterhin ist die Erfindung gerichtet auf ein Brennstoffzellensystem gemäß dem Oberbegriff von Patentanspruch 20.

Brennstoffzellensysteme sind bereits seit langem bekannt und haben in den letzten Jahren erheblich an Bedeutung gewonnen. Ähnlich wie Batteriesysteme erzeugen Brennstoffzellen elektrische Energie auf chemischem Wege, wobei die einzelnen Reaktanten kontinuierlich zugeführt und die Reaktionsprodukte kontinuierlich abgeführt werden.

Bei einer Brennstoffzelle werden die zwischen elektrisch neutralen Molekülen oder Atomen ablaufenden Oxidations- und Reduktionsprozesse in der Regel über einen Elektrolyten räumlich getrennt. Eine Brennstoffzelle besteht grundsätzlich aus einem Anodenteil, an den ein Brennstoff zugeführt wird. Weiterhin weist die Brennstoffzelle einen Kathodenteil auf, an dem ein Oxidationsmittel zugeführt wird. Räumlich getrennt sind der Anoden- und Kathodenteil durch den Elektrolyten. Bei einem derartigen Elektrolyten kann es sich beispielsweise um eine Membran handeln. Solche Membranen haben die Fähigkeit, Ionen durchzuleiten, Gase jedoch zurückzuhalten. Die bei der Oxidation abgegebenen Elektronen lassen sich als elektrischer Strom durch einen Verbraucher leiten.

Als gasförmige Reaktionspartner für die Brennstoffzelle können beispielsweise Wasserstoff als Brennstoff und Sauerstoff als Oxidationsmittel verwendet werden.

Will man die Brennstoffzelle mit einem leicht verfügbaren oder leichter zu speichernden Brennstoff wie etwa Erdgas, Methanol, Benzin, Diesel oder anderen Kohlenwasserstoffen betreiben, muss man den Kohlenwasserstoff in einer Vorrichtung zum Erzeugen/Aufbereiten eines Brennstoffs in einem sogenannten Reformierungsprozess zunächst in ein wasserstoffreiches Gas umwandeln. Diese Vorrichtung zum Erzeugen/Aufbereiten eines Brennstoffs besteht beispielsweise aus einer Dosiereinheit mit Verdampfer, einem Reaktor für die Reformierung, beispielsweise für die Wasserdampfreformierung, einer Gasreinigung sowie häufig auch wenigstens einem katalytischen Brenner zur Bereitstellung der Prozesswärme für die endothermen Prozesse, beispielsweise den Reformierungsprozess.

Ein Brennstoffzellensystem besteht in der Regel aus mehreren Brennstoffzellen, die beispielsweise wiederum aus einzelnen Schichten gebildet sein können. Die Brennstoffzellen sind vorzugsweise hintereinander angeordnet, beispielsweise sandwichartig übereinander gestapelt. Ein derart ausgebildetes Brennstoffzellensystem wird dann als Brennstoffzellenstapel beziehungsweise Brennstoffzellenstack bezeichnet.

Während des Betriebs der Brennstoffzelle entsteht in dieser neben Wärme auch Wasser, das abgeführt werden muss. Würde das während des Brennstoffzellenbetriebs entstehende Prozesswasser nicht aus der Brennstoffzelle abgeführt, würde die Brennstoffzelle überflutet und damit ihre Leistungsfähigkeit zumindest stark reduziert. Weiterhin ist es erforderlich, dass in der Brennstoffzelle während des Betriebs stets ein bestimmtes Maß an Feuchtigkeit vorherrscht. Ohne eine gewisse Feuchtigkeit würde beispielsweise der Elektrolyt der Brennstoffzelle austrocknen, was wiederum zu Leistungseinbußen oder gar Beschädigungen der Brennstoffzelle führen würde. Es ist daher erforderlich, innerhalb der Brennstoffzelle ein geeignetes Feuchtigkeitsmanagement zu etablieren.

Ebenso ist es erforderlich, dass die Brennstoffzelle während ihres Betriebs geheizt beziehungsweise gekühlt wird. Bei Brennstoffzellensystemen kann es vorteilhaft sein, den feuchten Mediumstrom mittels eines Kondensators zu kühlen und zu entfeuchten. Auf diese Weise zurückgewonnenes Wasser kann dem Brennstoffzellensystem erneut zugeführt werden. Eine solche Lösung ist beispielsweise in der DE 199 41 711 A1 beschrieben, bei der sowohl die Brennstoffzelle als auch der Kondensator über ein gasförmiges oder auch flüssiges Kühlmedium, vorzugsweise Luft oder Wasser, gekühlt werden. Gemäß dieser bekannten Lösung wird das Kühlmedium über eine als Ventilator ausgebildete Fördereinrichtung in die Brennstoffzelle eingeströmt. Der Ventilator kann entweder zustromseitig oder abstromseitig von den zu kühlenden Elementen angeordnet sein.

Generell weisen bekannte Brennstoffzellensysteme wenigstens eine Brennstoffzelle auf, wobei die Brennstoffzelle mit wenigstens einer Zufuhr für einen Mediumstrom und mit wenigstens einer Abfuhr für einen Mediumstrom verbunden ist. Zum Beströmen der Brennstoffzelle mit einem Medium ist eine Vorrichtung vorgesehen, die wenigstens eine in der Medienzufuhr angeordnete Fördereinrichtung aufweist. Mittels der Fördereinrichtung kann ein definierter Medium-Volumenstrom mit einer definierten Strömungsrichtung erzeugt werden.

Der Begriff "Beströmen" bedeutet im Lichte der vorliegenden Erfindung zunächst, dass ein Medium über die Medienzufuhr in die Brennstoffzelle eingeleitet wird. Unter dem Begriff sind jedoch auch solche Ausgestaltungsvarianten erfasst, bei denen ein Medium über eine Medienzufuhr in die Brennstoffzelle eingeleitet, durch diese hindurchgeleitet und anschließend über eine Medienabfuhr aus der Brennstoffzelle abgeleitet wird. Das Beströmen der Brennstoffzelle ist nicht richtungsgebunden, sodass die Strömungsrichtung des Mediums in Richtung der Brennstoffzelle beziehungsweise innerhalb der Brennstoffzelle auch umgekehrt werden kann.

Es ist bereits bekannt, dass die Medienzufuhr in einen der/den Brennstoffzelle(n) vorgeschalteten Verteilerraum mündet, in dem sich das Medium vor Eintritt in die Brennstoffzelle(n) verteilen kann. Derartige Lösungen sind beispielsweise in der DE 41 20 092 C2, der US 2003/0003333 A1, der EP 0 274 032 B1 oder der JP 2003036878 A beschrieben.

Aus der EP 0 947 024 B1 ist darüber hinaus auch bekannt, allerdings im Zusammenhang mit einer Brennstoffzellenkühlung, dass der Verteilerraum unmittelbar mit der wenigstens einen Brennstoffzelle in Kontakt bringbar ist, so dass der Eintritt des Mediums in die Brennstoffzelle(n) über einen vorgegebenen Bereich der Brennstoffzelle(n) erfolgt beziehungsweise erfolgen kann.

Alle bekannten Lösungen weisen jedoch Nachteile auf. Für den verlässlichen Betrieb der Brennstoffzelle(n) ist es unbedingt erforderlich, dass die Beströmung der Brennstoffzelle(n) mit den Medien äußerst homogen erfolgt. Nur so ist gewährleistet, dass die Brennstoffzelle(n) eine konstante Leistung erzeugt/erzeugen. Das bedeutet, dass dem Beströmvorgang eine besondere Aufmerksamkeit zu Teil werden muss. Alle bekannten Lösungen sind so aufgebaut, dass es einen zentralen Mediumeinlass gibt, über den das Medium in den Verteilerraum eintritt. Damit ist jedoch keine gerichtete Strömung im Verteilerraum und somit kein gerichteter homogener Eintritt des Mediums in den vorgegebenen Bereich der Brennstoffzelle(n) möglich.

Wenn es sich bei den zugeführten Medien um Prozessgase handelt, können diese nicht homogen zugeführt werden, so dass kein homogener Betrieb der Brennstoffzelle(n) möglich ist.

In der zuvor bereits genannten EP 0 947 024 B1 ist zwar vorgesehen, dass im Bereich des zentralen Mediumeinlasses Teilerelemente vorgesehen sind, die den eintretenden Kühlmittelstrom in Teilströme aufteilen. Allerdings können sich durch die zentrale Mediumzufuhr nach wie vor Unregelmäßigkeiten im Strömungsverhalten, beispielsweise durch Verwirbelungen oder dergleichen, bilden, so dass auch mit dieser Lösung keine homogene Zufuhr des Mediums zu der/den Brennstoffzelle(n) möglich ist.

Der vorliegenden Erfindung liegt die Aufgabe zugrunde, eine Vorrichtung zum Beströmen wenigstens einer Brennstoffzelle mit einem Medium bereitzustellen, mit der auf konstruktiv einfache Weise eine definierte und vor allem effiziente und homogene Beströmung der Brennstoffzelle erfolgen kann. Weiterhin soll ein entsprechend verbessertes Brennstoffzellensystem bereitgestellt werden.

Diese Aufgabe wird erfindungsgemäß gelöst durch die Vorrichtung mit den Merkmalen gemäß dem unabhängigen Patentanspruch 1 sowie das Brennstoffzellensystem mit den Merkmalen gemäß dem unabhängigen Patentanspruch 20. Weitere Vorteile, Merkmale, Details, Aspekte und Effekte der Erfindung ergeben sich aus den Unteransprüchen, der Beschreibung sowie den Zeichnungen. Dabei gelten Merkmale und Details, die im Zusammenhang mit der erfindungsgemäßen Vorrichtung beschrieben sind, selbstverständlich auch im Zusammenhang mit dem erfindungsgemäßen Brennstoffzellensystem, und umgekehrt.

Der Grundgedanke der vorliegenden Erfindung besteht darin, dass vor der/den Brennstoffzelle(n) nunmehr ein besonders ausgestalteter Verteilerraum vorgesehen ist, sodass der Eintritt des Mediums in die Brennstoffzelle(n) über einen definierten Bereich der Brennstoffzelle(n) erfolgen kann.

Gemäß dem ersten Aspekt der Erfindung wird eine Vorrichtung zum Beströmen wenigstens einer Brennstoffzelle mit einem Medium bereitgestellt, mit wenigstens einer Medienzufuhr zum Zuführen des Mediums zu der wenigstens einen Brennstoffzelle und mit wenigstens einer in der Medienzufuhr angeordneten Fördereinrichtung zum Erzeugen eines definierten Medium-Volumenstroms mit einer definierten Strömungsrichtung, wobei die Medienzufuhr in einen Verteilerraum mündet, in dem sich das Medium vor Eintritt in die Brennstoffzelle(n) verteilt/verteilen kann, und wobei der Verteilerraum unmittelbar mit der wenigstens einen Brennstoffzelle in Kontakt bringbar ist, sodass der Eintritt des Mediums in die Brennstoffzelle(n) über einen definierten Bereich der Brennstoffzelle(n) erfolgen kann. Die Vorrichtung ist erfindungsgemäß dadurch gekennzeichnet, dass die Vorrichtung derart ausgebildet ist, dass das Medium über die gesamte Länge des Verteilerraums mit einer definierten Strömungscharakteristik gerichtet in dem vorgegebenen Bereich in die Brennstoffzelle(n) eintritt beziehungsweise eintreten kann und dass in einem Eintrittsbereich des Verteilerraums Mittel zur definierten Verteilung des Medium-Volumenstroms in den Verteilerraum vorgesehen sind.

Durch die erfindungsgemäße Vorrichtung wird es auf besonders einfache Weise möglich, eine effiziente Beströmung der wenigstens einen Brennstoffzelle zu erzielen.

Dazu weist die Vorrichtung zunächst eine Medienzufuhr zum Zuführen eines Mediums zu der wenigstens einen Brennstoffzelle auf. Dabei ist die Erfindung jedoch nicht auf bestimmte Medien beschränkt. Generell ist die erfindungsgemäße Vorrichtung für jede Art von Medium einsetzbar, mit dem die Brennstoffzelle beströmt werden soll. Hierbei kann es sich beispielsweise um Medien zum Belüften oder Entlüften der Brennstoffzelle handeln. Ebenso ist es möglich, dass es sich bei den Medien um Medien zum Kühlen oder Heizen und/oder zum Befeuchten oder Entfeuchten der Brennstoffzelle handelt. Das Medium kann sowohl gasförmig als auch flüssig sein.

Natürlich sind auch Anwendungsfälle denkbar, bei denen es sich bei dem Medium um den Kathodengasstrom für die Brennstoffzelle handelt. Hierbei kann es sich beispielsweise um ein Oxidationsmittel, wie Sauerstoff oder dergleichen handeln, der aus der Umgebungsluft entnommen werden kann. Ebenso ist es denkbar, dass es sich bei dem Medium um den Anodengasstrom handelt. In diesem Fall handelt es sich bei dem Medium beispielsweise um den Brennstoff für die Brennstoffzelle, etwa um ein wasserstoffreiches Gas oder dergleichen.

Gemäß der vorliegenden Erfindung kann auch vorgesehen sein, dass die Brennstoffzelle(n) über mehrere erfindungsgemäße Vorrichtungen mit mehreren Medienströmen beströmt wird/werden.

Mittels der erfindungsgemäßen Vorrichtung ist insbesondere ein besonders homogenes Feuchtigkeitsmanagement innerhalb der wenigstens einen Brennstoffzelle möglich.

Um einen definierten Medium-Volumenstrom mit einer definierten Strömungsrichtung zu erzeugen, ist gemäß der vorliegenden Erfindung zunächst wenigstens eine Fördereinrichtung vorgesehen, die in der Medienzufuhr angeordnet ist. Dabei ist die Erfindung nicht auf besondere Typen von Fördereinrichtungen beschränkt. So ist es beispielsweise denkbar, dass die wenigstens eine Fördereinrichtung als Gebläse, als Kompressor, als Pumpe, als Turbine oder dergleichen ausgestaltet ist. Wenn nur eine einzige Fördereinrichtung vorgesehen ist und es sich bei dem Medium-Volumenstrom um einen Gasstrom handelt, kann die Fördereinrichtung beispielsweise als - insbesondere umschaltbares - Gebläse ausgestaltet sein. Wenn zwei oder mehr Fördereinrichtungen eingesetzt werden und der Mediumstrom als Gasstrom ausgebildet ist, können die Fördereinrichtungen beispielsweise in Form von Gebläsen ausgestaltet sein, die entweder saugend oder drückend betrieben werden und abwechselnd laufen. Natürlich sind diese Beispiele rein exemplarischer Natur, sodass auch andere Ausgestaltungsvarianten denkbar sind und vom Schutzumfang der vorliegenden Erfindung mit erfasst sind. Insbesondere ist es auch möglich, mehrere unterschiedliche Fördereinrichtungstypen miteinander zu kombinieren.

Vorteilhafterweise ist die Fördereinrichtung jedoch als Lüfter ausgestaltet. Dabei sind natürlich die unterschiedlichsten Lüfterbauarten denkbar. Beispielsweise kann die Fördereinrichtung als geradliniger, axialer Lüfter ausgebildet sein. Axiallüfter saugen große Luftmengen axial von vorne an und stoßen sie parallel zur Drehachse nach hinten aus. Für Einsatzgebiete, bei denen ein hoher Druckaufbau bei gleichzeitig geringerem Volumenstrom erforderlich ist, lassen sich vorteilhaft Radiallüfter einsetzen. Diese haben unter anderem den Vorteil, dass sie kostengünstig sind. Natürlich können auch Kombinationen der beiden vorgenannten Lüfterarten eingesetzt werden, bei denen es sich um die sogenannten Diagonallüfter handelt. In weiterer Ausgestaltung ist denkbar, dass der Lüfter als sogenannter Querstromlüfter beziehungsweise Querstromgebläse ausgebildet ist. Einige vorteilhafte Ausgestaltungsformen der Fördereinrichtung(en) werden im weiteren Verlauf der Beschreibung weiter unten näher erläutert.

Ein erstes grundlegendes Merkmal der vorliegenden Erfindung besteht darin, dass die Medienzufuhr in einen Verteilerraum mündet, in dem sich das Medium vor Eintritt in die Brennstoffzelle verteilen kann. Dieser Verteilerraum ist unmittelbar mit der wenigstens einen Brennstoffzelle in Kontakt bringbar. Das bedeutet, dass das aus der Medienzufuhr in den Verteilerraum einströmende Medium aus dem Verteilerraum direkt in die Brennstoffzelle eintritt. Da sich das Medium in dem Verteilerraum vor Eintritt in die Brennstoffzelle verteilen kann, erfolgt der Eintritt des Mediums in die Brennstoffzelle über einen definierten Bereich der Brennstoffzelle. Dabei ist dieser Bereich lediglich durch die Kontur des Verteilerraums begrenzt. Durch eine entsprechende Konturierung des Verteilerraums wird es somit möglich, definierte Bereiche der Brennstoffzelle mit einem Medium zu beströmen.

Erfindungsgemäß ist weiterhin vorgesehen, dass das Medium über die gesamte Länge des Verteilerraums mit einer definierten Strömungscharakteristik gerichtet in dem vorgegebenen Bereich in die Brennstoffzelle(n) eintreten kann. Dadurch wird es möglich, den Volumenstrom beziehungsweise die Teil-Volumenströme des Mediums in gewünschter Weise in die Brennstoffzelle(n) einzuleiten. Nicht ausschließliche Beispiele, wie dies vorteilhaft geschehen kann, werden im weiteren Verlauf der Beschreibung näher erläutert.

Wie weiter oben bereits geschildert wurde, muss der Mediumstrom beim Eintritt in die Brennstoffzelle(n) über den vorgegebenen Bereich möglichst homogen sein. Mit der erfindungsgemäßen Vorrichtung wird es möglich, dass der Mediumstrom bereits bei seinem Eintritt in den Verteilerraum gerichtet ist, und zwar über die gesamte Länge des Verteilerraums. Dieser bereits gerichtete Mediumstrom wird dann innerhalb des Verteilerraums zusätzlich noch gerichtet verteilt, so dass über die gesamte Länge des Verteilerraums eine homogene Strömung des Mediums erzeugt wird und das Medium anschließend in homogener Weise in die Brennstoffzelle(n) eintreten kann.

Die vorliegende Erfindung - das heißt sowohl die Vorrichtung als auch das Brennstoffzellensystem - ist nicht auf eine bestimmte Anzahl von Brennstoffzellen beschränkt. Vielmehr kann vorgesehen sein, dass zwei oder mehr Brennstoffzellen in einem Brennstoffzellensystem vorhanden sind, wobei diese Brennstoffzellen vorzugsweise hintereinander geschaltet sind und somit einen Brennstoffzellenstapel beziehungsweise einen Brennstoffzellenstack bilden. Ebenso ist es möglich, dass erfindungsgemäß zwei oder mehr Brennstoffzellenstacks vorgesehen sind.

Ebenso ist die Erfindung nicht auf den Einsatz im Zusammenhang mit bestimmten Brennstoffzellentypen beschränkt. Beispielsweise kann die wenigstens eine Brennstoffzelle als sogenannte PEM-Brennstoffzelle ausgebildet sein. Bei einer solchen Brennstoffzelle besteht der Elektrolyt aus einer Protonen leitenden Membran. Natürlich ist es auch denkbar, andere Brennstoffzellentypen zu verwenden.

Ein Grundgedanke der vorliegenden Erfindung besteht darin, dass das Medium mit einer definierten Strömungscharakteristik in die Brennstoffzelle(n) eintreten soll. Dazu soll die Vorrichtung in bestimmter Art und Weise ausgebildet sein. Diesbezüglich ist erfindungsgemäß vorgesehen, dass in einem Eintrittsbereich des Verteilerraums, in dem beispielsweise die Medienzufuhr in den Verteilerraum mündet, Mittel zur definierten Verteilung des Medium-Volumenstroms in den Verteilerraum vorgesehen sind. Diese Mittel haben die Aufgabe, den aus der Medienzufuhr in den Verteilerraum eintretenden Gesamt-Medium-Volumenstrom in Teil-Volumenströme aufzuteilen, wobei diese Teil-Volumenströme insbesondere gerichtet in den Verteilerraum eingeleitet werden können. Durch eine entsprechende Auswahl der Mittel wird es möglich, den Volumenstrom beziehungsweise die Teil-Volumenströme des Mediums in gewünschter Weise in den Verteilerraum einzuleiten. So ist es beispielsweise denkbar, dass über die Mittel eine gleichmäßige Verteilung des Medium-Volumenstroms in den Verteilerraum erfolgt. Natürlich ist es auch denkbar, dass unterschiedliche Bereiche des Verteilerraums mit unterschiedlichen großen Teil-Volumenströmen beaufschlagt werden. Auch dies ist durch eine entsprechende Auswahl der Mittel realisierbar.

Mit der erfindungsgemäßen Vorrichtung sind somit insbesondere zwei Bereiche zum Verteilen des Mediums realisierbar. Im ersten Bereich, bei dem es sich um einen Eintrittsbereich in den Verteilerraum handeln kann, wird das Medium gleichmäßig und gerichtet über die Länge des Verteilerraums verteilt. In einem zweiten Bereich, bei dem es sich um den Verteilerraum an sich handeln kann, wird das Medium gleichmäßig und gerichtet über die Höhe des Verteilerraums und damit durch die Brennstoffzellen hindurch verteilt. Dies kann beispielsweise über eine vorteilhafte geometrische Ausgestaltung des Verteilerraums erreicht werden. Nicht ausschließliche Beispiele hierzu werden im weiteren Verlauf der Beschreibung näher erläutert.

Vorteilhaft kann vorgesehen sein, dass die Mittel zur definierten Verteilung des Medium-Volumenstroms als Bestandteil der wenigstens einen Fördereinrichtung ausgebildet sind. Durch eine solche Ausgestaltung ist es möglich, den Verteilerraum beziehungsweise dessen Eintrittsbereich konstruktiv sehr einfach auszugestalten, da die Aufteilung des Gesamt-Medium-Volumenstroms bereits in der Fördereinrichtung erfolgt. Bei einer solchen Ausgestaltungsvariante mündet die Fördereinrichtung vorzugsweise in den Verteilerraum, beziehungsweise ist direkt im Eintrittsbereich des Verteilerraums angeordnet.

In anderer Ausgestaltung kann vorgesehen sein, dass die Mittel zur definierten Verteilung des Medium-Volumenstroms als Bestandteile des Verteilerraums ausgebildet sind. In diesem Fall kann die Fördereinrichtung besonders einfach ausgebildet sein. Sie muss lediglich in der Lage sein, einen definierten Medium-Volumenstrom zu erzeugen. Die eigentliche Aufteilung beziehungsweise Verteilung des Medium-Volumenstroms in den Verteilerraum hinein erfolgt dann durch die der Fördereinrichtung nachgeschalteten Mittel zur definierten Verteilung.

Vorteilhaft kann die wenigstens eine Fördereinrichtung als Querstrom-Fördereinrichtung ausgebildet sein, die sich entlang des Eintrittsbereichs des Verteilerraum erstreckt. Querstrom-Fördereinrichtungen, beispielsweise Querstromlüfter oder Querstromgebläse sind an sich bereits bekannt. Querstrom-Fördereinrichtungen werden vorzugsweise dort eingesetzt, wo eine großflächige Medienzufuhr benötigt wird. Querstrom-Fördereinrichtungen ermöglichen hohe Volumenströme bei geringem Druckaufbau und zeichnen sich generell durch walzenförmige Laufräder aus, die mit vielen kleinen Schaufeln versehen sind. Dieses Schaufel-Laufrad wird während des Betriebs zweimal in radialer Richtung durchströmt. Einmal erfolgt eine Durchströmung im Ansaugbereich von außen nach innen. Im Ausströmbereich erfolgt schließlich eine Durchströmung von innen nach außen. Querstrom-Fördereinrichtungen können zusätzlich über diverse Leitelemente verfügen, mittels derer in dem Schaufel-Laufrad Wirbel gebildet werden, die eine stabile Durchströmung des Laufrads gewährleisten.

Alternativ oder zusätzlich kann wenigstens eine Fördereinrichtung als Radiallüfter ausgebildet sein. Mittels eines solchen Lüfters kann das Medium über eine Eintrittsöffnung in den Eintrittsbereich des Verteilerraums eingebracht werden. Dort können dann wie vorstehend beschriebene erfindungsgemäße Mittel vorgesehen sein, um den Mediumstrom zu richten und in geeigneter Weise der/den Brennstoffzelle(n) zuzuführen.

Beispielsweise kann vorgesehen sein, dass im Eintrittsbereich des Verteilerraums zur definierten Verteilung des Medium-Volumenstroms ein oder mehrere Verteilerelement(e) vorgesehen ist/sind. Durch die Verwendung derartiger Verteilerelemente ist es auf besonders einfache Weise möglich, den Medium-Volumenstrom sehr gezielt aufzuteilen beziehungsweise innerhalb des Verteilerraums zu verteilen. Die Aufteilung des Medium-Volumenstroms in eine bestimmte Anzahl von Teilströmen kann über die Anzahl der verwendeten Verteilerelemente vorgenommen werden. Grundsätzlich ist es ausreichend, wenn ein einziges Verteilerelement vorgesehen ist. In einem solchen Fall würde der Medium-Volumenstrom in zwei Teilströme aufgespalten. Wenn jedoch eine feine Verteilung des Medium-Volumenstroms in den Verteilerraum gewünscht ist, werden vorzugsweise zwei oder mehr Verteilerelemente verwendet. Die Größe der Teil-Volumenströme beziehungsweise die Geschwindigkeit der in den Verteilerraum eintretenden Teil-Volumenströme wird unter anderem geregelt über den Abstand zwischen zwei benachbarten Verteilerelementen.

Ebenso ist es möglich, Größe und Geschwindigkeit des in den Verteilerraum eintretenden Teil-Volumenstroms über die Ausgestaltung der Verteilerelemente einzustellen. Diesbezüglich kann beispielsweise vorgesehen sein, dass wenigstens ein Verteilerelement zur Richtungsweisung eines Teilstroms des Medium-Volumenstroms wenigstens eine zumindest teilweise gekrümmte Leitfläche aufweist. "Gekrümmt" kann dabei heißen, dass die Leitfläche einen zumindest bereichsweise kurvigen Verlauf aufweist. Es ist jedoch auch denkbar, dass zwei gerade oder kurvige Teilbereiche der Leitfläche winklig aneinander stoßen beziehungsweise aufeinander stehen.

Die einzelnen Verteilerelemente können beispielsweise zunächst separat hergestellt und anschließend im Verteilerraum, beispielsweise in dessen Eintrittsbereich, angeordnet werden. Je nach Material der Verteilerelemente ist es beispielsweise möglich, dass die Verteilerelemente geklebt, geschweißt, gelötet oder dergleichen werden. Natürlich können in dem Verteilerraum auch geeignete Fixierelemente vorgesehen sein, mittels derer die Verteilerelemente an der gewünschten Stelle fixiert werden. Hierbei kann es sich beispielsweise um Klemmverbindungen oder dergleichen handeln. Die Verteilerelemente können neben ihrer strömungstechnischen Funktion beispielsweise auch die Aufgabe wahrnehmen, den Verteilerraum abzustützen und damit die gesamte Vorrichtung stabiler zu machen.

Vorteilhaft können im Eintrittsbereich mehrere Verteilerelemente vorgesehen sein, wobei die in den Eintrittsbereich des Verteilerraums hineinragenden Enden der Verteilerelemente von der Eintrittsöffnung in den Eintrittsbereich hin zu einer gegenüberliegenden Begrenzungswand des Eintrittsbereichs eine zunehmende Höhe aufweisen.

Dabei kann insbesondere vorgesehen sein, dass der Winkel (W5) zwischen einer gedachten Linie entlang der in den Eintrittsbereich hineinragenden Enden der Verteilerelemente und der Waagerechten 0 bis 30° beträgt. Vorteilhaft kann der Winkel (W5) 3 bis 15 Grad, ganz besonders bevorzugt 8 Grad oder in etwa 8 Grad, betragen.

Die Erzeugung einer definierten Strömungscharakteristik, mit der das Medium in die Brennstoffzelle(n) eintreten kann, kann beispielsweise auch dadurch erfolgen, dass der Verteilerraum an sich in einer bestimmten Art und Weise ausgebildet ist. In diesem Fall kann die gewünschte Strömungscharakteristik durch die geometrische Ausgestaltung des Verteilerraums beeinflusst werden.

Nachfolgend werden einige nicht ausschließliche Beispiele beschrieben, wie der Verteilerraum in einem solchen Fall ausgestaltet sein kann.

Vorzugsweise kann vorgesehen sein, dass der Verteilerraum von seinem Eintrittsbereich aus gesehen, hin zu dessen gegenüberliegendem Ende, eine sich verjüngende, insbesondere eine zumindest teilweise kurvenförmige, Kontur aufweist. Damit wird unterstützt, dass sich das Medium möglichst gleichmäßig im Verteilerraum verteilt und möglichst homogen über den vorgegebenen Bereich in die Brennstoffzelle eintritt.

Beispielsweise kann vorgesehen sein, dass der Verteilerraum durch eine Eintrittsöffnung, eine Übergangsöffnung für den Übertritt des Mediums in die Brennstoffzelle(n), ein erstes Wandelement sowie ein zweites Wandelement begrenzt ist, wobei sich die Wandelemente von der Eintrittsöffnung zur Übergangsöffnung erstrecken. Grundsätzlich ist die Erfindung nicht auf bestimmte Konturen und Längen der Wandelemente beschränkt. Was das zweite Wandelement betrifft, so ist für eine optimale und verwirbelungsfreie Luftführung grundsätzlich ein möglichst langes, flaches zweites Wandelement von Vorteil. Allerdings steigt dadurch der Platzbedarf für die gesamte Vorrichtung, was wiederum nachteilig ist. Es ist daher erforderlich, einen guten Kompromiss zwischen Strömungstechnik und Platzbedarf zu finden. Nachfolgend werden einige Beispiele beschrieben, wie dies erfolgreich umgesetzt werden kann.

In einer bevorzugten Ausführungsform kann die Länge des zweiten Wandelements, das heißt dessen Erstreckung von der Eintrittsöffnung zur Übergangsöffnung 80 - 200%, vorzugsweise 130 - 150% von der Höhe der Eintrittsöffnung betragen. Natürlich sind auch andere Längenmaße möglich.

Dabei ist die Erfindung nicht auf bestimmte Größen oder Konturen für die Eintrittsöffnung beschränkt. Beispielsweise kann die Eintrittsöffnung einen zumindest im wesentlichen rechteckigen Querschnitt aufweisen. Die Höhe der Eintrittsöffnung kann bevorzugt in einem Bereich zwischen 10 und 40 mm liegen. In einer vorteilhaften Ausführungsform kann die Eintrittsöffnung beispielsweise eine Höhe von 20 bis 25 mm, insbesondere 22 mm, aufweisen. Ebenfalls ist es denkbar, dass die Eintrittsöffnung eine Höhe aufweist, die 5 bis 30% der Länge der Übergangsöffnung, vorzugsweise 7 bis 25% der Länge der Übergangsöffnung, beträgt. Natürlich ist die Erfindung nicht auf die genannten Zahlenbeispiele beschränkt.

Beispielsweise kann auch vorgesehen sein, dass der Verteilerraum durch eine Eintrittsöffnung, einen sich daran anschließenden Eintrittsbereich, eine Übergangsöffnung für den Übertritt des Mediums in die Brennstoffzelle(n), ein erstes Wandelement sowie ein zweites Wandelement begrenzt ist, wobei sich die Wandelemente von dem Eintrittsbereich zur Übergangsöffnung erstrecken.

Vorteilhaft kann das erste Wandelement und/oder das zweite Wandelement zumindest bereichsweise einen gekrümmten Verlauf aufweisen. Dabei kann vorgesehen sein, dass der gekrümmte Verlauf des ersten und/oder zweiten Wandelements durch wenigstens einen Krümmungsradius (K1, K2, K3) gebildet wird.

Im einfachsten Fall liegt also eine durchgängige, über die gesamte Länge des Wandelements gleichmäßige Krümmung vor. Es ist jedoch auch denkbar, dass der gekrümmte Verlauf durch zwei oder mehr unterschiedliche Krümmungsradien gebildet wird. In diesem Fall besteht das Wandelement aus verschiedenen Segmenten unterschiedlicher Krümmung. Auch ist es denkbar, dass das erste und/oder zweite Wandelement nicht über die gesamte Länge einen gekrümmten Verlauf aufweist, sondern dass neben wenigstens einem Wandsegment mit einer Krümmung wenigstens auch ein Wandsegment mit einem geraden (linearen) Verlauf vorgesehen ist. Wenn das Wandelement zwei oder mehr Segmente mit einer Krümmung aufweist, können sich zwischen zwei gekrümmten Wandsegmenten und/oder vor und/oder hinter den gekrümmten Wandsegmenten jeweils Wandsegmente mit einem geraden (linearen) Verlauf anschließen. In einem solchen Fall können die Krümmungsradien der Wandsegmente entweder gleich oder unterschiedlich sein.

Nachfolgend werden einige nichtausschließliche Beispiele zur geometrischen Ausgestaltung der Wandelemente beschrieben.

Wenn ein Wandelement einen geraden Bereich aufweist, kann die Länge dieses geraden Wandbereichs beispielsweise 80 bis 120% der Länge der Übergangsöffnung betragen. Natürlich sind auch andere Längen denkbar, so dass die Erfindung nicht auf die genannten Beispiele beschränkt ist.

Wenn der gekrümmte Verlauf des ersten Wandelements durch jeweils einen Krümmungsradius gebildet wird, so kann dieser für das erste Wandelement beispielsweise 100 - 200% der Länge der Übergangsöffnung, vorzugsweise 140 - 160% betragen. Wenn der gekrümmte Verlauf des ersten Wandelements durch zwei Krümmungsradien gebildet wird, kann ein erster Krümmungsradius beispielsweise 200 - 500% der Länge der Übergangsöffnung, vorzugsweise etwa 300%, und ein zweiter Krümmungsradius beispielsweise 15 - 40% der Länge der Übergangsöffnung, vorzugsweise 25 - 35% betragen. Die Länge des zweiten Wandelements kann beispielsweise 40 - 120% der Länge der Übergangsöffnung, vorzugsweise etwa 70% betragen. Natürlich sind auch andere Längen denkbar, so dass die Erfindung nicht auf die genannten Beispiele beschränkt ist.

Vorteilhaft kann im Übergangsbereich vom ersten Wandelement zur Übergangsöffnung der Winkel (W1) zwischen der Übergangsöffnung und der Tangente (T1) des ersten Wandelements 20 bis 90 Grad betragen. In einem Ausführungsbeispiel kann der Winkel beispielsweise 60 bis 90 Grad, bevorzugt etwa 70 bis 80 Grad betragen. In einem anderen Beispiel kann der Winkel beispielsweise 30 bis 60 Grad, bevorzugt etwa 60 Grad betragen. Natürlich ist die Erfindung nicht auf die genannten Beispiele beschränkt.

In weiterer Ausgestaltung kann im Übergangsbereich von der Eintrittsöffnung zum ersten Wandelement und/oder vom Eintrittsbereich zum ersten Wandelement der Winkel (W2) zwischen der Tangente (T2) des ersten Wandelements und der Waagerechten (H1) 0 bis 40 Grad betragen. Hierbei sind verschiedene Ausgestaltungsformen denkbar. Beispielsweise kann das erste Wandelement, von der Übergangsöffnung für den Übertritt des Mediums in die Brennstoffzelle(n) aus gesehen, einen nach außen gewölbten Verlauf haben. In diesem Fall kann der Winkel (W2) beispielsweise 0 bis 10 Grad betragen. In einem Ausführungsbeispiel kann der Winkel bevorzugt 1 bis 4 Grad betragen. Beispielsweise kann aber auch vorgesehen, sein, dass das erste Wandelement von der Übergangsöffnung aus gesehen eine nach innen in den Verteilerraum hinein gewölbte Kontur aufweist. In diesem Fall kann der Winkel (W2) beispielsweise zwischen 10 und 30 Grad betragen. Natürlich ist die Erfindung nicht auf die genannten Beispiele beschränkt.

Wenn der Verlauf des ersten Wandelements durch einen Krümmungsradius und ein anschließendes gerades Stück gebildet wird, so kann der Krümmungsradius für das erste Wandelement beispielsweise 5 bis 30% der Länge der Übergangsöffnung, vorzugsweise 11 bis 14 % betragen. Der gerade Verlauf des Wandelements kann einen Winkel zur Übergangsöffnung von 0 bis 10 Grad, vorzugsweise von 2 bis 5 Grad einschließen. Natürlich ist die Erfindung nicht auf die genannten Beispiele beschränkt.

Weiterhin kann vorgesehen sein, dass im Übergangsbereich vom zweiten Wandelement zur Übergangsöffnung der Winkel (W3) zwischen der Tangente (T3) des zweiten Wandelements und der Senkrechten (H2) 0 bis 90 Grad beträgt. In einem vorteilhaften Ausführungsbeispiel kann der Winkel beispielsweise 5 bis 25 Grad, bevorzugt 10 bis 20 Grad betragen. In einem anderen Beispiel kann der Winkel beispielsweise 10 bis 40 Grad, bevorzugt 20 bis 30 Grad betragen. In noch einem anderen Ausführungsbeispiel kann der Winkel beispielsweise 0 bis 15 Grad, bevorzugt 0 bis 5 Grad betragen. Natürlich ist die Erfindung nicht auf die genannten Beispiele beschränkt.

Vorteilhaft kann im Übergangsbereich von der Eintrittsöffnung zum zweiten Wandelement und/oder vom Eintrittsbereich zum zweiten Wandelement der Winkel (W4) zwischen der Tangente (T4) des zweiten Wandelements und der Senkrechten (H2) 5 bis 90 Grad betragen. In einem Ausführungsbeispiel kann der Winkel beispielsweise 10 bis 30 Grad, bevorzugt etwa 20 Grad betragen. In einem anderen Beispiel kann der Winkel beispielsweise 30 bis 60 Grad, bevorzugt 40 bis 50 Grad betragen. In noch einem anderen Ausführungsbeispiel kann der Winkel beispielsweise 70 bis 90 Grad, bevorzugt 80 bis 90 Grad betragen. Natürlich ist die Erfindung nicht auf die genannten Beispiele beschränkt.

Wenn das zweite Wandelement einen zumindest teilweise gekrümmten Verlauf aufweist, so kann dieses beispielsweise aus einem gekrümmten und einem geraden Segment bestehen. In einem vorteilhaften Ausführungsbeispiel kann die Länge des zweiten Wandelements 120 bis 150% von der Höhe der Eintrittsöffnung betragen. Der Krümmungsradius des gekrümmten Segments kann beispielsweise 0 bis 30% der Länge der Übergangsöffnung, vorzugsweise etwa 3 bis 10%, betragen.

In weiterer Ausgestaltung kann vorgesehen sein, dass wenigstens eine Trennplatte vorgesehen ist, die innerhalb des Verteilerraums zumindest bereichsweise zwei oder mehr Strömungskanäle ausbildet. Bei den Trennplatten kann es sich dann beispielsweise um besonders ausgestaltete Finnen handeln, die innerhalb des Verteilerraums bessere Strömungscharakteristika des Medium-Volumenstroms ermöglichen. Beispielsweise können durch die Trennplatten Verwirbelungen innerhalb des Verteilerraums vermieden beziehungsweise reduziert werden. Die Anzahl beziehungsweise Anordnungspositionen der Trennplatten kann/können dabei je nach Anwendungsfall unterschiedlich sein und individuell angepasst werden. Die Position der Trennplatten ist dabei insbesondere abhängig vom Setzungsmaß des Brennstoffzellenstacks.

Die Trennplatten können in gerader, gekrümmter oder teilweise gekrümmter Form ausgestaltet sein. Bei Vorhandensein einer Krümmung kann der Radius beispielsweise, jedoch nicht ausschließlich, 5 bis 25% von der Länge der Übergangsöffnung betragen.

Vorzugsweise kann vorgesehen sein, dass die wenigstens eine Fördereinrichtung in ihrer Förderrichtung und/oder in ihrer Fördermenge variabel ausgebildet ist.

Insbesondere kann vorgesehen sein, dass die Fördereinrichtung mit veränderlicher Last betrieben werden kann. Das bedeutet, dass die Leistung der Fördereinrichtung und damit die von der Fördereinrichtung zu bewältigende Fördermenge variabel ist. Beispielsweise kann vorgesehen sein, dass die Last der Fördereinrichtung in Stufen verstellbar ist. Ebenso kann jedoch auch eine stufenlose Veränderbarkeit der Last, mit der die Fördereinrichtung betrieben wird, von Vorteil sein.

In weiterer Ausgestaltung kann wenigstens eine Steuereinrichtung vorgesehen sein, wobei die wenigstens eine Fördereinrichtung über die Steuereinrichtung gesteuert wird. Dazu kann die Steuereinrichtung beispielsweise über geeignete Programmmittel verfügen.

Gemäß dem zweiten Aspekt der Erfindung wird ein Brennstoffzellensystem bereitgestellt, aufweisend wenigstens eine Brennstoffzelle mit einer Zufuhr für einen Mediumzustrom und mit wenigstens einer Abfuhr für einen Mediumabstrom. Das Brennstoffzellensystem ist erfindungsgemäß dadurch gekennzeichnet, dass in der Zufuhr und/oder der Abfuhr wenigstens eine wie vorstehend beschriebene erfindungsgemäße Vorrichtung vorgesehen ist. Über die Zufuhr wird der Mediumzustrom der Brennstoffzelle zugeführt. Über die Abfuhr wird dieser Mediumstrom nach seinem Aufenthalt in der Brennstoffzelle als Mediumabstrom von dieser abgeleitet.

Dabei ist die Erfindung jedoch nicht auf eine bestimmte Anzahl von Vorrichtungen beschränkt. Grundsätzlich ist es ausreichend, dass nur eine einzige Vorrichtung vorgesehen ist, die dann in der Zufuhr oder der Abfuhr angeordnet ist. Diese Vorrichtung weist dann vorteilhaft eine Fördereinrichtung auf, die bezüglich ihrer Förderrichtung umschaltbar ist.

Vorteilhaft kann vorgesehen sein, dass sowohl in der Zufuhr als auch in der Abfuhr jeweils eine wie vorstehend beschriebene erfindungsgemäße Vorrichtung vorgesehen ist, und dass je nach Aktivierung und Förderrichtung der Fördereinrichtungen eine der Vorrichtungen zum Beströmen der Brennstoffzelle(n) zum Zuführen des Medium-Volumenstroms in die Brennstoffzelle(n) ausgebildet ist, wobei die jeweils andere Vorrichtung zum Abführen des Medium-Volumenstroms aus/den Brennstoffzelle(n) ausgebildet ist.

In diesem Fall können die beiden Vorrichtungen bezüglich des Mittelpunkts der Brennstoffzelle(n) beziehungsweise des Brennstoffzellenstacks zumindest ungefähr punktsymmetrisch angeordnet sein.

Bei Verwendung von zwei Vorrichtungen dient der Verteilerraum derjenigen Vorrichtung, die zum Abführen des Medium-Volumenstroms ausgebildet ist, als Sammelraum, in dem das aus der Brennstoffzelle austretende Medium zunächst gesammelt wird. Dieser Sammelraum ist dann mit einer Medienabfuhr verbunden, über die das im Sammelraum befindliche Medium abtransportiert werden kann.

Durch die wie vorstehend beschriebene Ausgestaltung des Brennstoffzellensystems ist es nunmehr in besonders einfacher Weise möglich, insbesondere eine homogene Feuchtigkeitsverteilung innerhalb der/den Brennstoffzelle(n) zu erreichen. Dies kann dadurch geschehen, dass die Strömungsrichtung des Mediumstroms durch die Brennstoffzelle(n) hindurch zumindest zeitweilig umgekehrt wird. Um dies zu erreichen, kann jeweils eine der Vorrichtungen in Betrieb sein, was bedeutet, dass die entsprechende Fördereinrichtung aktiviert ist. Die jeweils andere Vorrichtung ist dann vorteilhaft außer Betrieb. Natürlich ist es auch denkbar, dass permanent beide Vorrichtungen beziehungsweise die darin befindlichen Fördereinrichtungen in Betrieb sind. In diesem Fall sind die Förderrichtungen der Fördereinrichtungen vorzugsweise so eingestellt, dass die eine Fördereinrichtung im drückendem Betrieb und die andere Fördereinrichtung gleichzeitig im Saugbetrieb arbeitet. Bei Umkehrung der Strömungsrichtung werden dann die Förderrichtungen der beiden Fördereinrichtungen umgekehrt. Dazu kann insbesondere vorgesehen sein, dass beide Fördereinrichtungen jeweils mit einer Steuereinrichtung verbunden sind. Besonders vorteilhaft ist dabei vorgesehen, dass beide Fördereinrichtungen beziehungsweise alle Fördereinrichtungen über eine einzige, gemeinsame Steuereinrichtung verfügen. Natürlich ist auch denkbar, dass jede der Fördereinrichtungen über eine eigene Steuereinrichtung verfügt und dass die einzelnen Steuereinrichtungen miteinander kommunizieren, vorzugsweise über eine gemeinsame Rechnereinheit.

In weiterer Ausgestaltung kann vorgesehen sein, dass das Brennstoffzellensystem wenigstens einen Brennstoffzellenstack aus zwei oder mehr hintereinander angeordneten Brennstoffzellen aufweist. In einem solchen Fall steht der Verteilerraum der wenigstens einen Vorrichtung zum Beströmen der Brennstoffzellen vorzugsweise unmittelbar mit einem definierten Bereich des Brennstoffzellenstacks, insbesondere in dessen Längsausdehnung, in Kontakt.

Die erfindungsgemäße Vorrichtung zum Beströmen kann vorteilhaft eine Dimension aufweisen, dass sie sich über den eigentlichen Brennstoffzellenstack hinaus bis auf dessen Endplatten erstreckt. Damit sitzt die Vorrichtung auf den Endplatten auf und kann somit bezüglich des gesamten Brennstoffzellenstacks eine stabilisierende Wirkung entfalten.

Die erfindungsgemäße Beströmvorrichtung ist insbesondere für einen geringen Druckabfall und eine Homogenität in der Luftverteilung über den gesamten Brennstoffzellenstack geeignet. Dies wird beispielsweise durch die besonderen Einund Aus-Strömquerschnitte, durch die Anordnung und die Anstellwinkel der einzelnen Verteilerelemente (Umlenkelemente) erreicht. Die Summe aller konstruktiven Maßnahmen führt beispielsweise auch dazu, dass zur Liftversorgung der Brennstoffzelle(n) normale, kostengünstige Radiallüfter verwendet werden können. Bei Bedarf können natürlich auch andere Quellen genutzt werden, etwa Gasringverdichter, Rootsverdichter und dergleichen. Ein weiterer Vorteil ist, dass die Luftzuführung für ein System mit offener Kathode (nicht druckaufgeladen) sehr kompakt gebaut werden kann.

Die Erfindung wird nun anhand von Ausführungsbeispielen unter Bezugnahme auf die beiliegenden Zeichnungen näher erläutert. Es zeigen:
- Figur 1: in schematischer Darstellung eine Draufsicht auf ein Brennstoffzellensystem mit einer erfindungsgemäßen Vorrichtung zum Beströmen wenigstens einer Brennstoffzelle gemäß einem ersten Ausführungsbeispiel der Erfindung;
- Figur 2: in schematischer Darstellung einen Querschnitt durch einen Verteilerraum einer erfindungsgemäßen Vorrichtung zum Beströmen wenigstens einer Brennstoffzelle;
- Figur 3: in schematischer Ansicht eine Trennplatte zum Einsatz in einem Verteilerraum einer erfindungsgemäß Vorrichtung zum Beströmen wenigstens einer Brennstoffzelle;
- Figur 4: in schematischer Querschnittsansicht eine weitere Ausführungsform eines erfindungsgemäßen Brennstoffzellensystem mit erfindungsgemäßen Vorrichtungen zum Beströmen wenigstens einer Brennstoffzelle;
- Figur 5: eine perspektivische Darstellung des in Figur 4 dargestellten Brennstoffzellensystems;
- Figur 6: eine schematische Darstellung einer anderen Ausführungsform des erfindungsgemäßen Brennstoffzellensystems;
- Figur 7: eine schematische Darstellung einer weiteren Ausführungsform des erfindungsgemäßen Brennstoffzellensystems;
- Figuren 8a)-c): Darstellungen noch einer anderen Ausführungsform einer erfindungsgemäßen Vorrichtung zum Beströmen einer Brennstoffzelle;
- Figur 9: eine perspektivische Darstellung einer weiteren Ausführungsform einer erfindungsgemäßen Vorrichtung zum Beströmen wenigstens einer Brennstoffzelle;
- Figur 10: eine Draufsicht auf die in Figur 9 dargestellte Vorrichtung zum Beströmen wenigstens einer Brennstoffzelle;
- Figur 11: eine Seitenansicht der in den Figuren 9 und 10 dargestellten Vorrichtung zum Beströmen wenigstens einer Brennstoffzelle;
- Figur 12: eine Schnittdarstellung durch den Verteilerraum der Vorrichtung zum Beströmen wenigstens einer Brennstoffzelle entlang der Schnittlinie A-A in Figur 11;
- Figur 13: eine Frontansicht der in den Figuren 9 und 10 dargestellten Vorrichtung zum Beströmen wenigstens einer Brennstoffzelle; und
- Figur 14: eine Schnittdarstellung durch die Vorrichtung zum Beströmen wenigstens einer Brennstoffzelle entlang der Schnittlinie B-B in Figur 13.

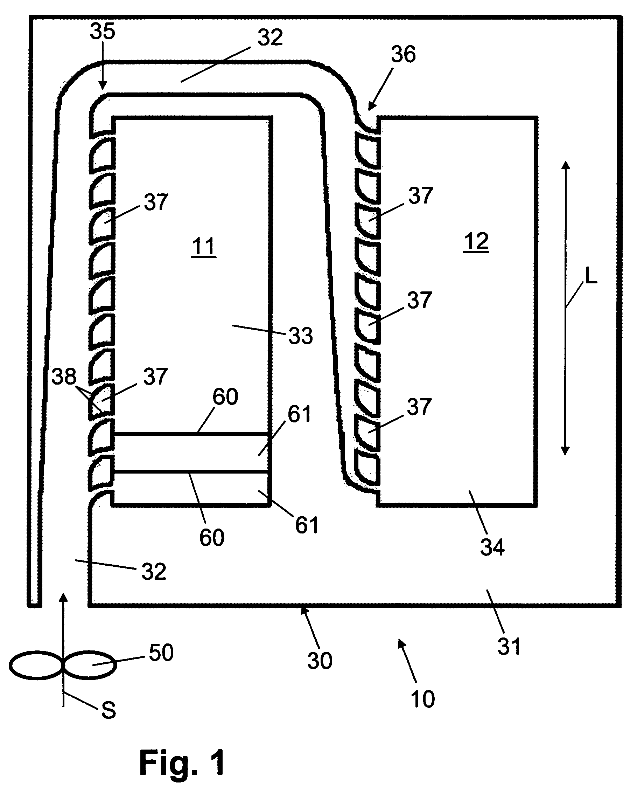

In Figur 1 ist ein Brennstoffzellensystem 10 dargestellt, das zunächst zwei Brennstoffzellenstacks 11 und 12 aufweist. Die einzelnen Brennstoffzellenstacks 11 und 12 bestehen aus einer Reihe von Brennstoffzellen, die jeweils aus einer Anzahl von Platten bestehen. Die einzelnen Platten beziehungsweise die einzelnen Brennstoffzellen sind in Längsrichtung L der Brennstoffzellenstacks 11 und 12 hintereinander angeordnet beziehungsweise gestapelt. In Figur 1 ist eine Darstellungsform gewählt, die eine Draufsicht auf die Brennstoffzellenstacks 11 und 12 ermöglicht.

Die Brennstoffzellenstacks 11 und 12 sollen mit einem Medium beströmt werden. Im vorliegenden Fall handelt es sich hierbei um Luft, die zum Feuchtigkeitsmanagement innerhalb der Brennstoffzellen verwendet wird. Insbesondere soll mit der Beströmung der Brennstoffzellen ein homogenes Feuchtigkeitsmanagement innerhalb der Brennstoffzellen erreicht werden.

Zu diesem Zweck ist eine Vorrichtung 30 zum Beströmen der Brennstoffzellenstacks 11 und 12 vorgesehen, die zunächst ein Gehäuse 31 aufweist. Innerhalb des Gehäuses 31 befindet sich eine Medienzufuhr 32, über die das Luft-Medium zu den Brennstoffzellenstacks 11 und 12 transportiert wird. Um einen definierten Medium-Volumenstrom mit einer definierten Strömungsrichtung S zu erzeugen, ist in der Medienzufuhr 32 eine Fördereinrichtung 50 vorgesehen, die im vorliegenden Beispiel als Lüfter oder Gebläse ausgebildet ist. Mittels des Gebläses 50 wird ein gerichteter Volumenstrom erzeugt, der in die Medienzufuhr 32 eingespeist wird.

Die Medienzufuhr 32 mündet jeweils in einen Verteilerraum 33, 34, über den das Medium über einen definierten Bereich in die Brennstoffzellenstacks 11, 12 eingeströmt werden kann. Die Verteilerräume 33, 34 sind derart gestaltet, dass sich das Medium vor Eintritt in die Brennstoffzellenstacks 11, 12 in diesen frei verteilen kann.

Zu diesem Zweck sind in einem Eintrittsbereich 35, 36 der Verteilerräume 33, 34, in denen die Medienzufuhr 32 in die Verteilerräume 33, 34 mündet, Mittel zur definierten Verteilung des Medium-Volumenstroms in die Verteilerräume 33, 34 vorgesehen.

Dabei sind diese Mittel als Bestandteil der Verteilerräume 33, 34 ausgebildet und weisen eine Anzahl von Verteilerelementen 37 auf. Die Verteilerelemente 37 sind jeweils in einem bestimmten Abstand zueinander angeordnet, sodass zwischen diesen eine Eintrittsöffnung für das Medium in die Verteilerräume 33, 34 gebildet wird. Über den Abstand der einzelnen Verteilerelemente 37 zueinander lässt sich der die Medienzufuhr 32 durchströmende Medium-Volumenstrom in eine Anzahl von Teil-Volumenströmen aufteilen. Dadurch wird gewährleistet, dass sich der Medium-Volumenstrom möglichst gleichmäßig innerhalb des Verteilerraums 33, 34 verteilt, bevor dieser in die Brennstoffzellenstacks 11, 12 eintritt. Um die Richtungsgebung der Teil-Volumenströme noch genauer einstellen zu können, ist bei dem Beispiel gemäß Figur 1 vorgesehen, dass die Verteilerelemente 37 jeweils gekrümmte Leitflächen 38 aufweisen.

Um innerhalb der Verteilerräume 33, 34 verbesserte Strömungsverhältnisse zu erreichen und insbesondere eine Verwirbelung des Mediums zu verhindern, sind in den Verteilerräumen 33, 34 eine Anzahl von Trennplatten 60 vorgesehen. Durch diese Trennplatten 60 werden eine Anzahl von Strömungskanälen 61 geschaffen, die eine gerichtete Zufuhr des Mediums in die Brennstoffzellenstacks 11, 12 erleichtern. Der besseren Übersicht halber sind in Figur 1 lediglich zwei Trennplatten 60 dargestellt. Die Positionen der einzelnen Trennplatten 60 ergeben sich insbesondere nach dem Setzungsmaß der Brennstoffzellenstacks 11, 12.

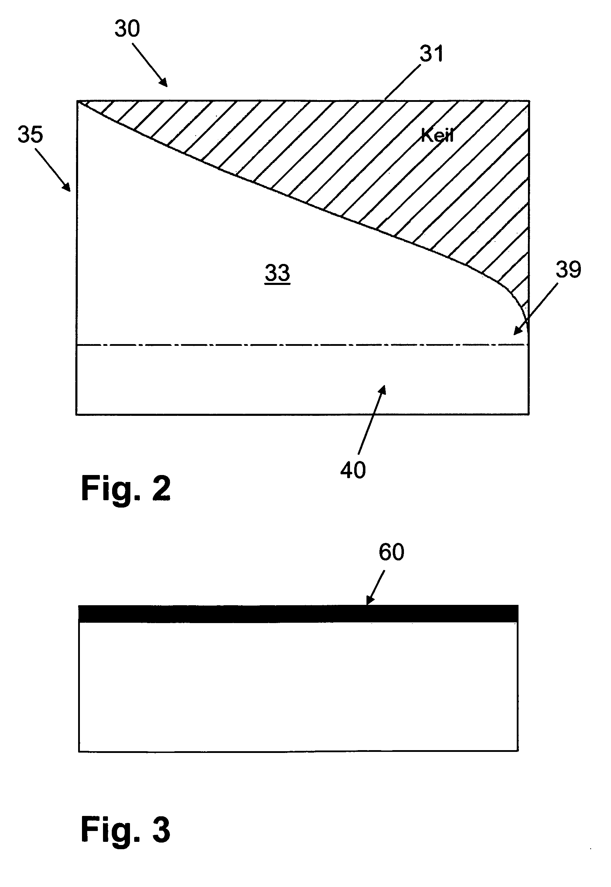

In Figur 2 ist eine schematische Teil-Querschnittsansicht einer Vorrichtung 30 zum Beströmen wenigstens einer Brennstoffzelle dargestellt. Wiederum ist innerhalb des Gehäuses 31 ein Verteilerraum 33 dargestellt. Um die gleichmäßige Verteilung des Mediums innerhalb des Verteilerraums 33 sowie die gleichmäßige Beströmung der Brennstoffzellenstacks zu gewährleisten, weist der Verteilerraum 33 gemäß Figur 2 von seinem Eintrittsbereich 35 aus gesehen hin zu dessen gegenüberliegenden Ende 39 eine sich verjüngende Kontur auf. Im vorliegenden Beispiel ist die Kontur derart gewählt, dass der Verteilerraum 33 von seinem Eintrittsbereich 35 hin zu dessen gegenüberliegenden Ende 39 eine im Wesentlichen keilförmige Struktur aufweist.

Im unteren Bereich des Verteilerraums 33, der demjenigen Bereich entspricht, der mit den Brennstoffzellenstacks in Verbindung steht und über den das Medium in die Brennstoffzellenstacks eintritt, ist ein Aufnahmebereich 40 für ein nicht näher dargestelltes Mattenelement vorgesehen. Das Mattenelement kann beispielsweise die Funktion haben, den in die Brennstoffzellenstacks eintretenden Mediumstrom vorab zu reinigen. In diesem Fall handelt es sich bei dem Mattenelement um ein Filterelement. Natürlich könnte ein solches Mattenelement auch dazu dienen, die in den Verteilerraum 33 eintretenden Teil-Volumenströme des Mediums weiter aufzuteilen, sodass eine sehr feine Einspeisung des Mediums in die Brennstoffzellenstacks möglich ist. Das Mattenelement kann beispielsweise aus Fasern gebildet sein. Vorteilhaft kann das Mattenelement aus einem Material gebildet sein, das dem hindurchströmenden Mediumstrom Feuchtigkeit entzieht.

Figur 3 zeigt in schematischer Ansicht eine Trennplatte 60, die von ihrer Dimensionierung her beispielsweise in den Aufnahmebereich 40 des in Figur 2 dargestellten Verteilerraums 33 eingepasst werden könnte. Insbesondere müssen die Trennplatten 60 so in den Verteilerraum 33 eingepasst werden, dass sie keine Öffnungen in den einzelnen Brennstoffzellen beziehungsweise Brennstoffzellenplatten der Brennstoffzellenstacks verdecken.

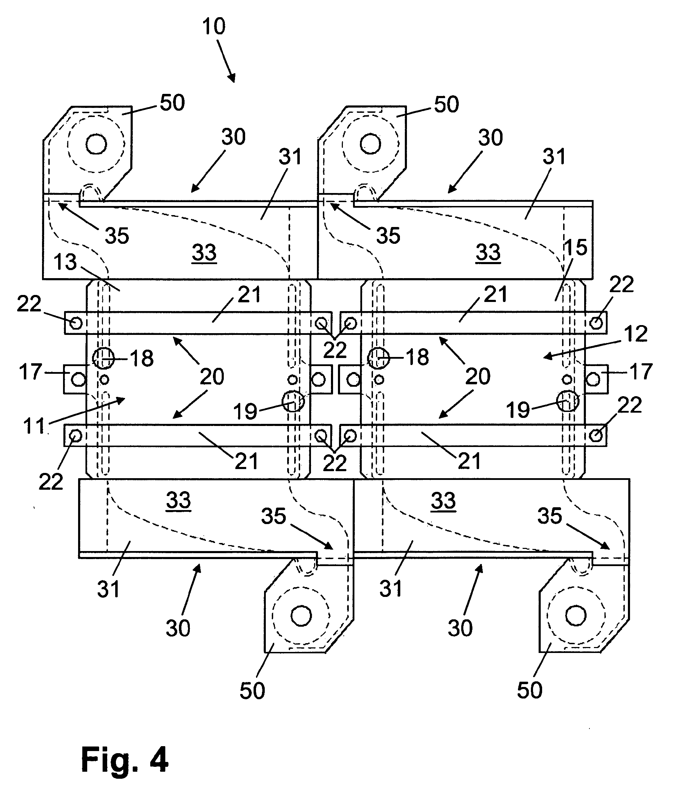

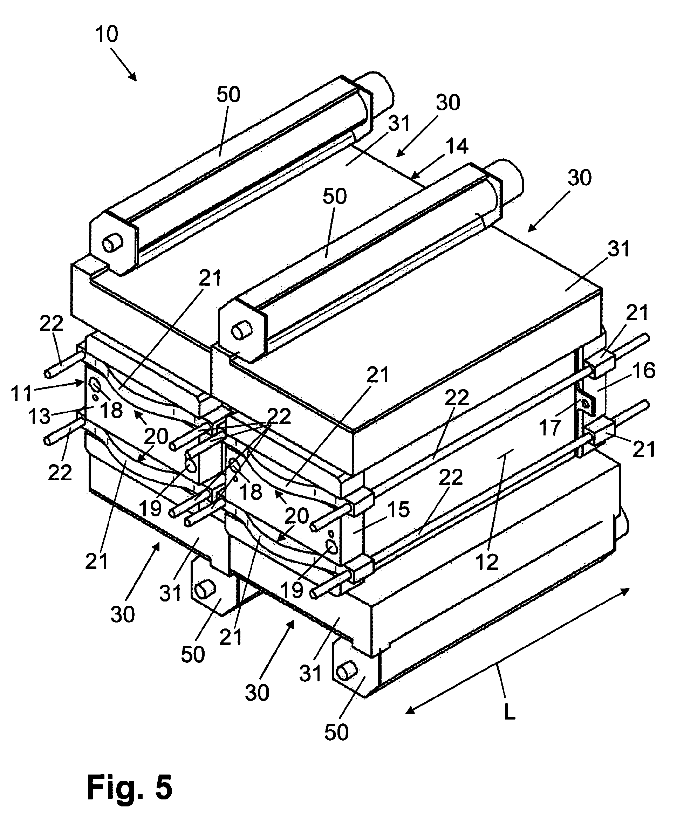

In den Figuren 4 und 5 ist ein weiteres Ausführungsbeispiel eines erfindungsgemäßen Brennstoffzellensystems 10 dargestellt. Wiederum besteht das Brennstoffzellensystem 10 aus zwei Brennstoffzellenstacks 11, 12, bei denen sich zwischen jeweiligen Endplatten 13, 14 beziehungsweise 15, 16 Stapel von Brennstoffzellen beziehungsweise Brennstoffzellenplatten befinden. Die Brennstoffzellenstacks 11, 12 weisen eine Längsausdehnung L auf.

In den Endplatten 13, 15 sind jeweils Öffnungen 18 für die Oxidationsmittelzufuhr beziehungsweise Öffnungen 19 für die Brennstoffabfuhr dargestellt. Entsprechende Öffnungen für die Oxidationsmittelabfuhr beziehungsweise die Brennstoffzufuhr sind ebenfalls in den Endplatten 14, 16 vorgesehen, in den Figuren jedoch nicht explizit dargestellt.

Zur Entnahme des von den Brennstoffzellen erzeugten Stroms weisen die Brennstoffzellenstacks 11, 12 entsprechende Stromabnahmeplatten 17 auf.

Damit die aus Plattenstapeln bestehenden Brennstoffzellenstacks 11, 12 in ihrer Kontur fixiert bleiben, sind entsprechende Verspanneinrichtungen 20 vorgesehen. Diese Verspanneinrichtungen 20 bestehen jeweils aus Federelementen 21, die über entsprechende Verspanngestänge 22 miteinander verbunden sind. Auf diese Weise lassen sich die Brennstoffzellenstacks 11, 12 fest zusammenfügen. Darüber hinaus sind die einzelnen Platten der Brennstoffzellenstacks 11, 12 üblicherweise noch miteinander verklebt.

Um nun die Brennstoffzellenstacks 11, 12 in ausreichender und geeigneter Weise belüften zu können, damit in den Brennstoffzellenstacks 11, 12 eine homogene Feuchtigkeitsverteilung realisierbar ist und damit die Brennstoffzellenstacks 11, 12 in geeigneter Weise gekühlt werden können, sind pro Brennstoffzellenstack 11, 12 jeweils zwei Vorrichtungen 30 zum Beströmen der Brennstoffzellenstacks 11, 12 vorgesehen. Die Vorrichtungen 30 sind in Längsausdehnung L der Brennstoffzellenstacks 11, 12 auf jeweils gegenüberliegenden Seiten der Brennstoffzellenstacks 11, 12 angeordnet. Jede der Vorrichtungen 30 verfügt wiederum über ein Gehäuse 31, in dem jeweils ein Verteilerraum 33 vorgesehen ist. Ähnlich wie bei dem in Figur 1 dargestellten Beispiel wird wiederum ein Medium-Volumenstrom gleichmäßig in dem Verteilerraum 33 verteilt, sodass dieser über einen definierten Bereich der Brennstoffzellenstacks 11, 12 in diese eintreten kann. Dazu sind wiederum Mittel zur definierten Verteilung des Medium-Volumenstroms in den Verteilerraum 33 vorgesehen. Bei dem in den Figuren 4 und 5 dargestellten Beispiel sind diese Mittel jedoch als Bestandteile der Fördereinrichtungen 50 ausgebildet. Über die Fördereinrichtungen 50 wird der Mediumstrom mit einer definierten Strömungsrichtung in den Verteilerraum 33 und damit in die Brennstoffzellenstacks 11, 12 eingeleitet.

Bei dem in den Figuren 4 und 5 dargestellten Beispiel sind die Fördereinrichtungen 50 in Form von Querstrom-Fördereinrichtungen ausgebildet, beispielsweise in Form von Querstrom-Lüftern bzw. Querstrom-Gebläsen. Diese Querstrom-Fördereinrichtungen 50 erstrecken sich entlang der Eintrittsbereiche 35 der Verteilerräume 33. Querstrom-Fördereinrichtungen sind insbesondere dazu geeignet, eine großflächige Medienzuführung bereitzustellen.

Die Fördereinrichtungen 50 der Vorrichtungen 30 beziehungsweise die Verwendung von jeweils zwei Vorrichtungen 30 an jeweils gegenüberliegenden Seiten der Brennstoffzellenstacks 11, 12 macht es möglich, dass die Strömungsrichtung des Mediums durch die Brennstoffzellenstacks 11, 12 hindurch während des Betriebs umgekehrt werden kann. Dadurch wird eine besonders homogene Durchströmung der Brennstoffzellenstacks 11, 12 gewährleistet.

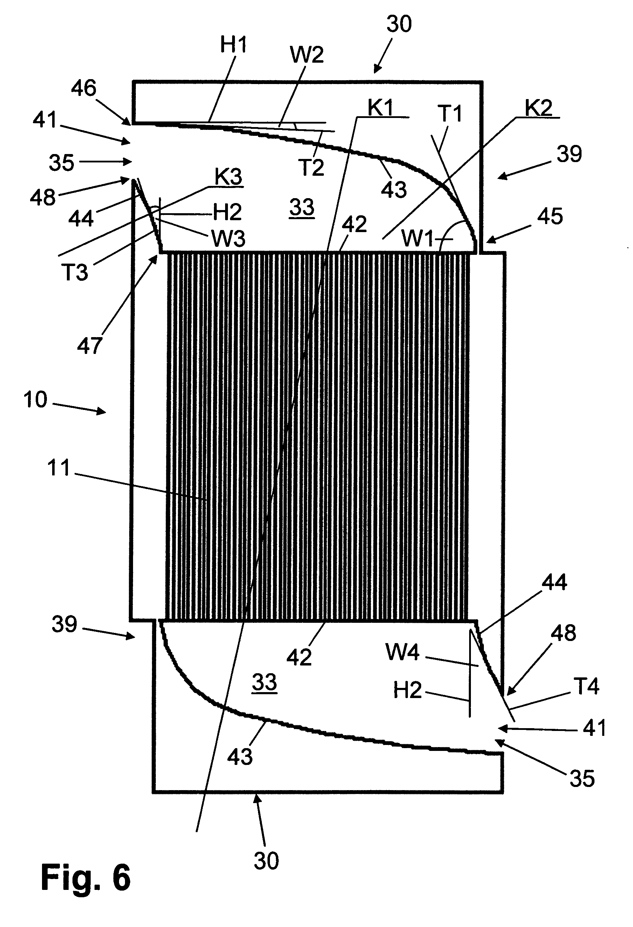

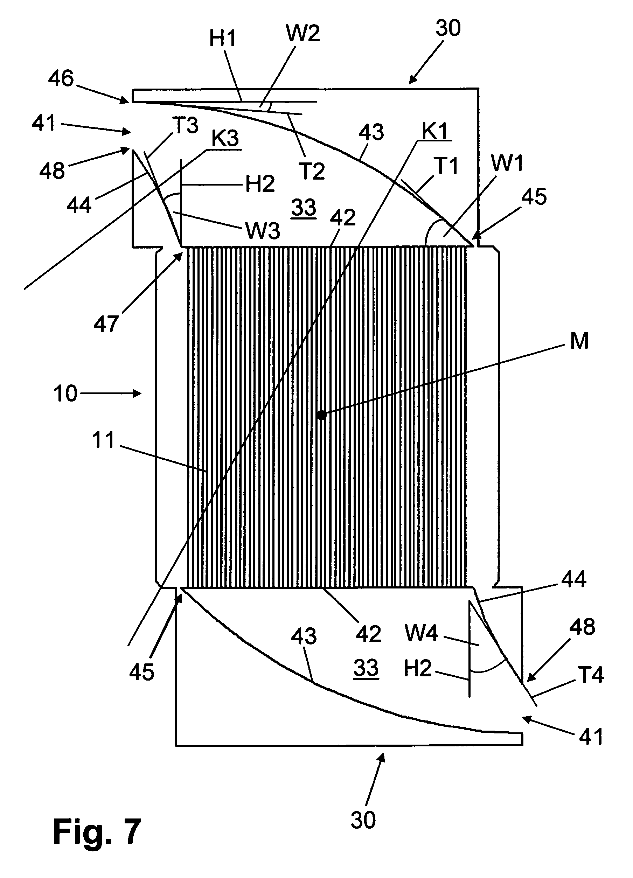

In den Figuren 6 und 7 sind zwei Ausführungsbeispiele erfindungsgemäßer Brennstoffzellensysteme 10 dargestellt, bei denen die definierte Strömungscharakteristik, mit der das Medium in dem vorgegebenen Bereich eines Brennstoffzellenstacks 11 eintreten kann, durch eine besondere geometrische Ausgestaltung des Verteilerraums 33 erfolgt.

Sowohl in der Zufuhr als auch in der Abfuhr für den Brennstoffzellenstack 11 ist eine Vorrichtung 30 zum Beströmen vorgesehen. Wie sich insbesondere aus Figur 7 ergibt, sind die beiden Vorrichtungen bezüglich des Mittelpunkts M des Brennstoffzellenstacks 11 in etwa punktsymmetrisch angeordnet.

Die Vorrichtungen 30 gemäß der Figuren 6 und 7 weisen jeweils einen Verteilerraum 33 auf, der durch eine Eintrittsöffnung 41, eine Übergangsöffnung 42 (für den Übertritt des Mediums aus dem Verteilerraum 33 in den Brennstoffzellenstack 11), ein erstes Wandelement 43 und ein zweites Wandelement 44 begrenzt ist. Die Eintrittsöffnung 41 weist eine Höhe von 22 mm auf. Das erste Wandelement 43 und das zweite Wandelement 44 weisen jeweils einen gekrümmten Verlauf auf und erstrecken sich jeweils von der Eintrittsöffnung 41 bis hin zur Übergangsöffnung 42.

Die maximale Höhe des Verteilerraums 33 im Bereich der Eintrittsöffnung 41 beträgt 50 mm, die maximale Länge des Verteilerraums beträgt 140 mm.

Das zweite Wandelement 44 weist in beiden Figuren 6 und 7 jeweils einen gekrümmten Verlauf auf, der durch einen einzigen Krümmungsradius K3 gebildet wird. Das erste Wandelement 43 weist in Figur 6 einen gekrümmten Verlauf auf, der durch zwei Krümmungsradien K1 und K2 gebildet wird. Das erste Wandelement 43 gemäß Figur 7 hingegen weist einen gekrümmten Verlauf auf, der nur durch einen einzigen Krümmungsradius K1 gebildet wird.

Bei dem Ausführungsbeispiel gemäß Figur 6 ist das erste Wandelement 43 derart ausgebildet, dass im Übergangsbereich 45 zwischen dem ersten Wandelement 43 und der Übergangsöffnung 42 der Winkel W1 zwischen der Tangente T1 des ersten Wandelements 43 sowie der Übergangsöffnung 60 bis 90 Grad, idealerweise etwa 80 Grad beträgt. Der Krümmungsradius K2 beträgt in diesem Bereich vorzugsweise 15 - 40% der Länge der Übergangsöffnung 42 (das heißt von deren Erstreckung zwischen erstem Wandelement 43 und zweitem Wandelement 44), idealerweise etwa 25 - 35%. Der sich an den Krümmungsradius K2 anschließende weitere Krümmungsradius K1 beträgt vorzugsweise 200 - 500% der Länge der Übergangsöffnung 42, idealerweise etwa 300%. Im Übergangsbereich 46 von der Eintrittsöffnung 41 zum ersten Wandelement 43 beträgt der Winkel W2 zwischen der Tangente T2 des ersten Wandelements 43 sowie der Waagerechten H1 vorzugsweise 0 bis 10 Grad, idealerweise etwa 1 bis 4 Grad.

Das zweite Wandelement 44 gemäß Figur 6 weist vorteilhaft eine Länge auf, die 80 bis 200% der Höhe der Eintrittsöffnung 41 entspricht, idealerweise 130 bis 150%. Die Länge des zweiten Wandelements 44 entspricht dabei der Strecke vom Übergangsbereich 48 zwischen Eintrittsöffnung 41 und zweitem Wandelement 44 bis hin zum Übergangsbereich 47 zwischen zweitem Wandelement 44 und der Übergangsöffnung 42. Im Übergangsbereich 48 von der Eintrittsöffnung 41 zum zweiten Wandelement 44 (dies ist im unteren Teil von Figur 6 dargestellt) beträgt der Winkel W4 zwischen der Tangente T4 des zweiten Wandelements 44 sowie der Senkrechten H2 vorzugsweise 10 bis 30 Grad, idealerweise etwa 20 Grad. Im Übergangsbereich 47 von der Übergangsöffnung 42 zum zweiten Wandelement 44 beträgt der Winkel W3 zwischen der Tangente T3 des zweiten Wandelements 44 sowie der Senkrechten H2 vorzugsweise 5 bis 25 Grad, idealerweise etwa 10 bis 20 Grad. Das zweite Wandelement 44 weist vorzugsweise einen gekrümmten Verlauf mit einem Krümmungsradius K3 auf, der vorteilhaft 40 - 120% der Länge der Übergangsöffnung 42 beträgt, idealerweise etwa 70%.

Durch die Vorrichtung 30 beziehungsweise den entsprechend ausgestalteten Verteilerraum 33 lässt sich das in den Verteilerraum 33 eintretende Medium besonders gut verteilen und in definierter Weise in den Brenstoffzellenstck 11 einleiten.

Das in Figur 7 dargestellte Brennstoffzellensystem 10 weist in der Zufuhr und in der Abfuhr zwei Vorrichtungen 30 auf, die in ihrem Grundaufbau den in Figur 6 dargestellten Vorrichtungen entsprechen. Im Unterschied zu dem in Figur 6 dargestellten Ausführungsbeispiel verfügen die Vorrichtungen 30 gemäß Figur 7 über erste Wandelemente 43, die einen durch nur einen Krümmungsradius K1 gebildeten gekrümmten Verlauf aufweisen.

Die geometrische Ausgestaltung der Vorrichtung 30 ergibt sich dabei wie folgt.

Das erste Wandelement 43 ist derart ausgebildet, dass im Übergangsbereich 45 zwischen dem ersten Wandelement 43 und der Übergangsöffnung 42 der Winkel W1 zwischen der Tangente T1 des ersten Wandelements 43 sowie der Übergangsöffnung 30 bis 60 Grad, idealerweise etwa 40 Grad beträgt. Der Krümmungsradius K1 des ersten Wandelements 43 beträgt vorzugsweise 100 - 300% der Länge der Übergangsöffnung 42, idealerweise etwa 140 - 160%. Im Übergangsbereich 46 von der Eintrittsöffnung 41 zum ersten Wandelement 43 beträgt der Winkel W2 zwischen der Tangente T2 des ersten Wandelements 43 sowie der Waagerechten H1 vorzugsweise 0 bis 10 Grad, idealerweise etwa 1 bis 4 Grad.

Das zweite Wandelement 44 gemäß Figur 7 weist vorteilhaft eine Länge auf, die 80 bis 200% der Höhe der Eintrittsöffnung 41 entspricht, idealerweise 130 bis 150%. Im Übergangsbereich 48 von der Eintrittsöffnung 41 zum zweiten Wandelement 44 (dies ist im unteren Teil von Figur 7 dargestellt) beträgt der Winkel W4 zwischen der Tangente T4 des zweiten Wandelements 44 sowie der Senkrechten H2 vorzugsweise 30 bis 60 Grad, idealerweise etwa 40 bis 50 Grad. Im Übergangsbereich 47 von der Übergangsöffnung 42 zum zweiten Wandelement 44 beträgt der Winkel W3 zwischen der Tangente T3 des zweiten Wandelements 44 sowie der Senkrechten H2 vorzugsweise 10 bis 40 Grad, idealerweise etwa 20 bis 30 Grad. Das zweite Wandelement 44 weist vorzugsweise einen gekrümmten Verlauf mit einem Krümmungsradius K3 auf, der vorteilhaft 40 - 120% der Länge der Übergangsöffnung 42 beträgt, idealerweise etwa 70%.

Mit den in den Figuren 6 und 7 dargestellten Ausführungsbeispielen lässt sich das in den Verteilerraum 33 eintretende Medium besonders gut verteilen und in den Brennstoffzellenstack einbringen. Gleichzeitig ist nur ein geringer Platzbedarf für die Beström-Vorrichtungen 30 erforderlich. Dabei ist die Erfindung nicht auf die genannten Zahlenbeispiele beschränkt, so dass auch andere Geometrien vom Gegenstand der vorliegenden Erfindung mit erfasst sind.

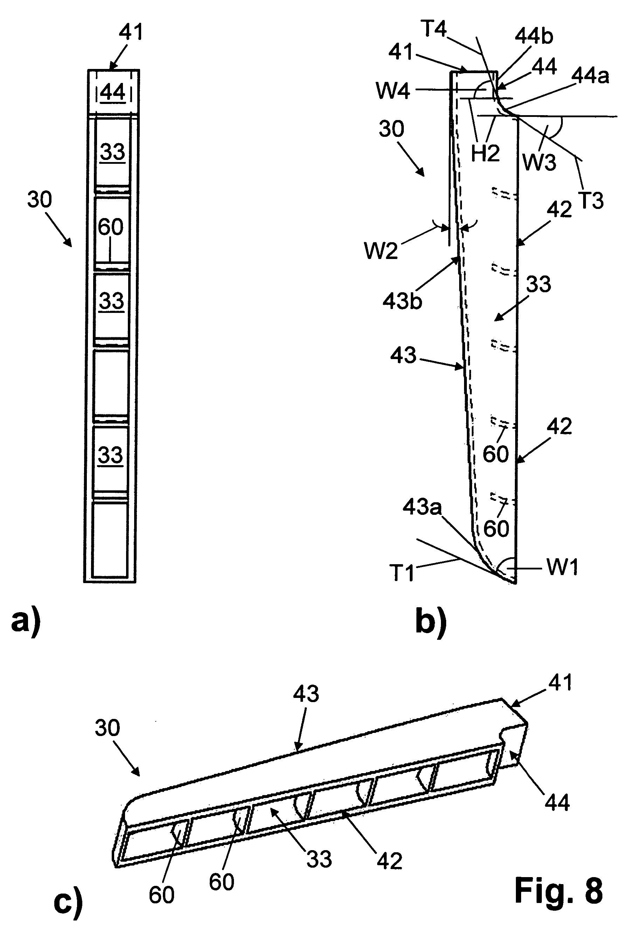

In den Figuren 8a bis 8c ist eine weitere Ausführungsform einer erfindungsgemäßen Vorrichtung 30 zum Beströmen wenigstens einer Brennstoffzelle dargestellt. Die Vorrichtung 30 weist wie bei den zuvor beschriebenen Ausführungsbeispielen einen Verteilerraum 33 auf, in dem sich eine Reihe von Trennplatten 60 befinden, die weiter oben schon beschrieben worden sind.

Der Verteilerraum 30 wird durch eine Eintrittsöffnung 41, eine Übergangsöffnung 42, ein erstes Wandelement 43 und ein zweites Wandelement 44 begrenzt. Das erste Wandelement 43 und das zweite Wandelement 44 weisen einen zumindest bereichsweise gekrümmten Verlauf auf. Zum grundsätzlichen Aufbau sowie der grundsätzlichen Funktionsweise des Verteilerraums 33 und der Vorrichtung 30 wird ebenfalls auf die vorstehenden Ausführungen im Rahmen der Figuren 1 bis 7 verwiesen.

Die Trennplatten 60 sind im Beispiel in gekrümmter Konfiguration ausgebildet, können jedoch auch in gerader Form gestaltet sein. Die Trennplatten 60 können in ihrer gekrümmten Form beispielsweise einen Radius von etwa 5 bis 25% der Länge der Übergangsöffnung 42 aufweisen.

Das zweite Wandelement 44 besteht - aus Richtung der Eintrittsöffnung 41 gesehen - aus einem geraden (linearen) Segment 44b und einem sich daran anschließenden, gekrümmten Segment 44a. Die Gesamtlänge des zweiten Wandelements 44 beträgt vorzugsweise 80 bis 200% der Höhe der Eintrittsöffnung 41, idealerweise 120 bis 150%. Der Krümmungsradius des gekrümmten Segments 44a beträgt beispielsweise 0 bis 30% der Länge der Übergangsöffnung 42, idealerweise 3 bis 10%. Die Eintrittsöffnung 41 kann eine Höhe zwischen 20 bis 25 mm aufweisen, idealerweise eine Höhe zwischen 22 und 24 mm. Die Übergangsöffnung 42 kann im Beispiel eine Länge von 300 mm aufweisen.

Das erste Wandelement 43 weist ebenfalls ein gerades (lineares) Segment 43b und ein sich daran anschließendes gekrümmtes Segment 43a auf. Der Krümmungsradius des gekrümmten Segments 43a kann beispielsweise 5 bis 30% der Länge der Übergangsöffnung 42, vorzugsweise 11 bis 14% betragen. Das gerade Segment 43b des Wandelements 43 kann einen Winkel W2 zur Ebene der Übergangsöffnung 42 von 0 bis 10 Grad, vorzugsweise 2 bis 5 Grad, besitzen. Die Länge des geraden Wandsegments 43b kann beispielsweise 80 bis 120% der Länge der Übergangsöffnung 42 betragen.

Im Übergangsbereich vom ersten Wandelement 43 zur Übergangsöffnung 42 kann der Winkel W1 zwischen der Übergangsöffnung 42 und der Tangente T1 des ersten Wandelements 43 vorteilhaft 60 bis 90 Grad, vorzugsweise 70 bis etwa 80 Grad betragen. Im Übergangsbereich vom zweiten Wandelement 44 zur Übergangsöffnung 42 kann der Winkel W3 zwischen der Tangente T3 des zweiten Wandelements 44 und der Senkrechten H2 vorteilhaft 0 bis 15 Grad, bevorzugt 0 bis 5 Grad betragen. Im Übergangsbereich von der Eintrittsöffnung 41 zum zweiten Wandelement 44 schließlich kann der Winkel W4 zwischen der Tangente T4 und der Senkrechten H2 vorzugsweise 70 bis 90 Grad, idealerweise 80 bis 90 Grad betragen.

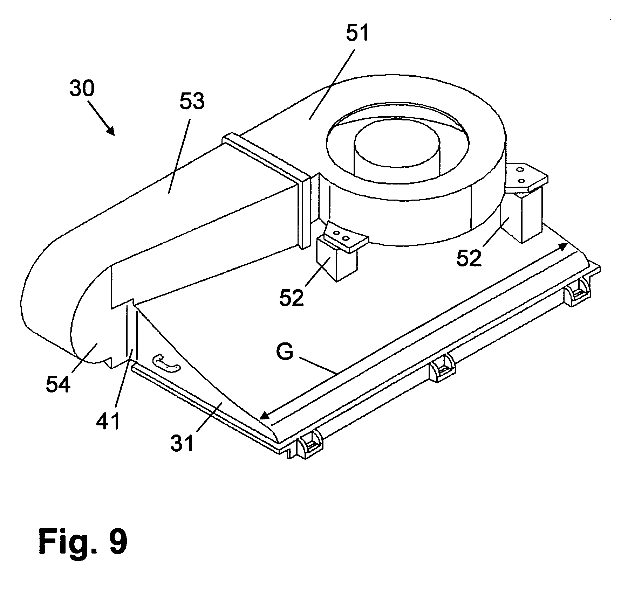

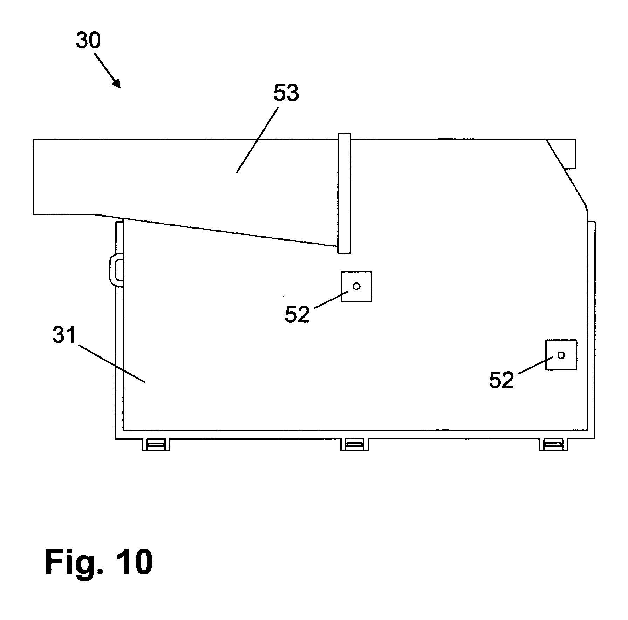

In den Figuren 9 bis 14 ist schließlich noch ein weiteres Ausführungsbeispiel für eine Vorrichtung 30 zum Beströmen wenigstens einer Brennstoffzelle dargestellt. Zu der grundsätzlichen Funktionsweise der Beströmvorrichtung 30 wird zunächst auf die vorstehenden Ausführungen zu den anderen Ausführungsbeispielen vollinhaltlich Bezug genommen und hiermit verwiesen.

Die Beströmvorrichtung weist einen durch ein Gehäuse 31 begrenzten Verteilerraum 33 auf. Auf dem Gehäuse 31 ist über eine geeignete Befestigungseinrichtung 52 eine Fördereinrichtung in Form eines Radiallüfters 51 befestigt.

Der Radiallüfter 51 erzeugt die Luft, die in den Verteilerraum 33 eingeführt und über diesen in homogener Weise gerichtet der/den Brennstoffzelle(n) zugeführt werden soll. Dazu wird die vom Radiallüfter 51 erzeugte Luft zunächst über einen Eintrittskanal 53 und einen Umlenkkanal 54 der Eintrittsöffnung 41 eines Eintrittsbereichs 35 des Verteilerraums 33 zugeführt.

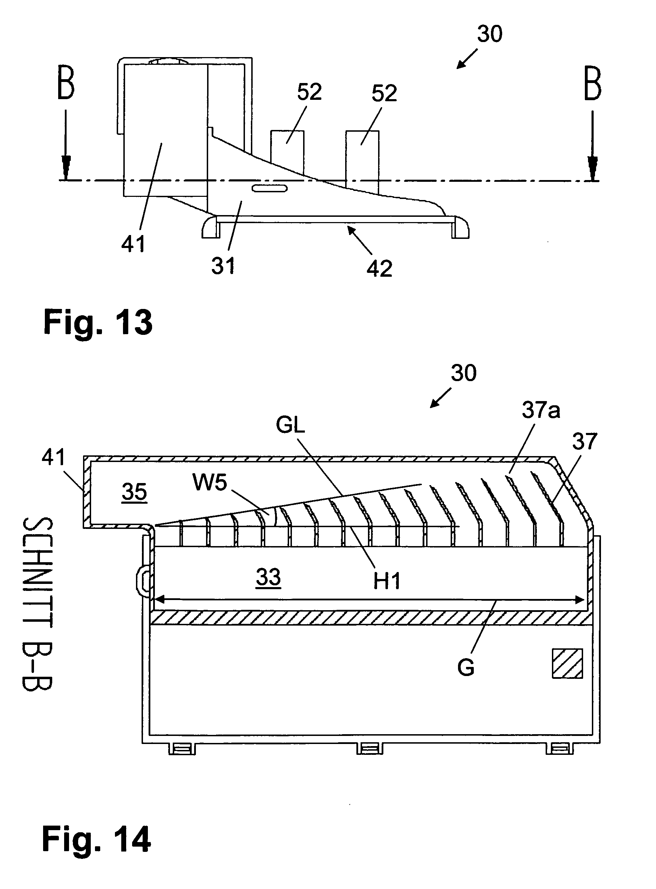

Der Eintrittsbereich 35 geht in den eigentlichen Verteilerraum 33 über. Damit das Medium bereits im Eintrittsbereich 35 über die gesamte Länge G des Verteilerraums 33 mit einer definierten Strömungscharakteristik gerichtet in dem vorgegebenen Bereich der Brennstoffzelle(n) eintreten kann, sind im Eintrittsbereich 35 Verteilerelemente 37 vorgesehen (Figur 14). Die Verteilerelemente 37 weisen gekrümmte Leitflächen auf, wobei im vorliegenden Beispiel die Verteilerelemente 38 aus zwei jeweils geraden Teilelementen bestehen und die Teilelemente winkelig aufeinander stehen.

Um ein homogenes Einströmen des Mediums aus dem Eintrittsbereich 35 in den eigentlichen Verteilerraum 33 zu gewährleisten ist vorgesehen, wie dies insbesondere aus der Figur 14 ersichtlich ist, dass die in den Eintrittsbereich 35 des Verteilerraums hineinragenden Enden 37a der Verteilerelemente 37 von der Eintrittsöffnung 41 in den Eintrittsbereich 35 hin zu einer gegenüberliegenden Begrenzungswand 65 des Verteilerraums 33 eine zunehmende Höhe aufweisen.

Dabei ist die Zunahme der Höhe der Verteilerelemente 37 so gewählt, dass der Winkel W5 zwischen einer gedachten Linie GL entlang der in den Eintrittsbereich 35 hineinragenden Enden 37a der Verteilerelemente 37 und der Waagerechten H1 0 bis 30 Grad, vorzugsweise 3 bis 15 Grad und ganz besonders bevorzugt 8 Grad beträgt. Damit wird sichergestellt, dass das in den Eintrittsbereich 35 einströmende Medium über die gesamte Länge G der Beströmvorrichtung 30 gerichtet in den Verteilerraum 33 eintritt.

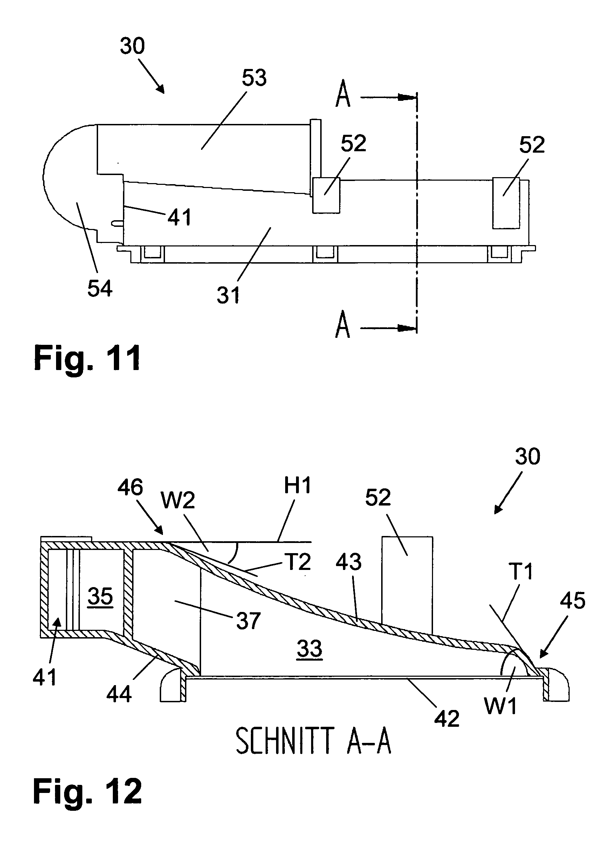

Um diese gerichtete Strömung aufrecht zu erhalten und möglicherweise noch zu optimieren, ist der Verteilerraum 33 selbst in besonderer Weise ausgestaltet. Dies soll anhand der Schnittdarstellung in Figur 12 erläutert werden.

Wie aus Figur 12 ersichtlich ist, wird das in den Eintrittsbereich 35 eintretende Medium zunächst durch die Verteilerelemente 37 in gleichmäßige Teilströme aufgeteilt (was durch die unterschiedliche Höhe der Verteilerelemente 37 gewährleistet wird) und gerichtet in den Verteilerraum 33 eingeleitet (und zwar über dessen gesamte Länge). Um dass Medium anschließend gerichtet in die Brennstoffzellen(n) einleiten zu können, weist der Verteilerraum 33 besonders ausgebildete Wandelemente auf.

Wie sich besonders anschaulich aus Figur 12 ergibt, ist der Verteilerraum 33 durch die Eintrittsöffnung 41, den sich daran anschließenden Eintrittsbereich 35, eine Übergangsöffnung 42 für den Übertritt des Mediums in die Brennstoffzelle(n), ein erstes Wandelement 43 und ein zweites Wandelement 444 begrenzt. Dabei erstrecken sich die Wandelemente 43, 44 von dem Eintrittsbereich 35 hin zur Übergangsöffnung 42.

Das erste Wandelement 43 ist derart ausgebildet, dass im Übergangsbereich 45 zwischen dem ersten Wandelement 43 und der Übergangsöffnung 42 der Winkel W1 zwischen der Tangente T1 des ersten Wandelements 43 sowie der Übergangsöffnung 60 bis 90 Grad, idealerweise etwa 80 Grad beträgt. Im Übergangsbereich 46 vom Eintrittsbereich 35 zum ersten Wandelement 43 beträgt der Winkel W2 zwischen der Tangente T2 des ersten Wandelements 43 sowie der Waagerechten H1 vorzugsweise 10 bis 40 Grad, idealerweise etwa 15 bis 30 Grad.

Während die in den Figuren 6 und 7 dargestellte Beströmvorrichtung 30 ein erstes Wandelement 43 aufweist, das von der Übergangsöffnung 42 für den Übertritt des Mediums in die Brennstoffzelle(n) aus gesehen einen nach außen gewölbten Verlauf hat, weist das in den Figuren 9 bis 14 dargestellte erste Wandelement 43 von der Übergangsöffnung 42 aus gesehen eine nach innen in den Verteilerraum 33 hinein gewölbte Kontur auf.

### Bezugszeichenliste

- 10: Brennstoffzellensystem
- 11: Brennstoffzellenstack
- 12: Brennstoffzellenstack
- 13: Endplatte
- 14: Endplatte
- 15: Endplatte
- 16: Endplatte
- 17: Stromabnahmeplatte
- 18: Oxidationsmittelzufuhr
- 19: Brennstoffabfuhr
- 20: Verspanneinrichtung
- 21: Federelement
- 22: Verspanngestänge

- 30: Vorrichtung zum Beströmen wenigstens einer Brennstoffzelle
- 31: Gehäuse
- 32: Medienzufuhr
- 33: Verteilerraum
- 34: Verteilerraum
- 35: Eintrittsbereich in den Verteilerraum
- 36: Eintrittsbereich in den Verteilerraum
- 37: Verteilerelement
- 37a: Ende des Verteilerelements
- 38: Leitfläche
- 39: in Bezug auf den Eintrittsbereich gegenüberliegendes Ende des Verteilerraums
- 40: Aufnahmebereich
- 41: Eintrittsöffnung
- 42: Übergangsöffnung
- 43: erstes Wandelement
- 43a: gekrümmtes Wandsegment
- 43b: gerades Wandsegment
- 44: zweites Wandelement
- 44a: gekrümmtes Wandsegment
- 44b: gerades Wandsegment
- 45: Übergangsbereich erstes Wandelement in Übergangsöffnung
- 46: Übergangsbereich Eintrittsöffnung in erstes Wandelement
- 47: Übergangsbereich zweites Wandelement in Übergangsöffnung
- 48: Übergangsbereich Eintrittsöffnung in zweites Wandelement

- 50: Fördereinrichtung
- 51: Radiallüfter
- 52: Befestigungseinrichtung
- 53: Eintrittskanal
- 54: Umlenkkanal

- 60: Trennplatte
- 61: Strömungskanal
- 65: Begrenzungswand des Verteilerraums

- G: Gesamte Länge des Verteilerraums
- GL: gedachte Linie
- H1: Waagerechte
- H2: Senkrechte
- K1: Krümmungsradius
- K2: Krümmungsradius
- K3: Krümmungsradius
- L: Längsausdehnung des Brennstoffzellenstacks
- M: Mittelpunkt der Brennstoffzelle(n)
- S: Strömungsrichtung des Medium-Volumenstroms

- T1: Tangente
- T2: Tangente
- T3: Tangente
- T4: Tangente
- W1: Winkel
- W2: Winkel
- W3: Winkel
- W4: Winkel
- W5: Winkel

## Patentansprüche

1. Vorrichtung zum Beströmen wenigstens einer Brennstoffzelle mit einem Medium, mit wenigstens einer Medienzufuhr (32) zum Zuführen des Mediums zu der wenigstens einen Brennstoffzelle, und mit wenigstens einer in der Medienzufuhr (32) angeordneten Fördereinrichtung (50) zum Erzeugen eines definierten Medium-Volumenstroms mit einer definierten Strömungsrichtung (S), wobei die Medienzufuhr (32) in einen Verteilerraum (33, 34) mündet, in dem sich das Medium vor Eintritt in die Brennstoffzelle(n) verteilt/verteilen kann und wobei der Verteilerraum (33, 34) unmittelbar mit der wenigstens einen Brennstoffzelle in Kontakt bringbar ist, sodass der Eintritt des Mediums in die Brennstoffzelle(n) über einen vorgegebenen Bereich der Brennstoffzelle(n) erfolgen kann, **dadurch gekennzeichnet, dass** die Vorrichtung derart ausgebildet ist, dass das Medium über die gesamte Länge (G) des Verteilerraums (33, 34) mit einer definierten Strömungscharakteristik gerichtet in dem vorgegebenen Bereich in die Brennstoffzelle(n) eintritt/eintreten kann und dass in einem Eintrittsbereich (35, 36) des Verteilerraums, Mittel zur definierten Verteilung des Medium-Volumenstroms in den Verteilerraum (33, 34) vorgesehen sind.

2. Vorrichtung nach Anspruch 1, **dadurch gekennzeichnet, dass** die Mittel zur definierten Verteilung des Medium-Volumenstroms als Bestandteil der wenigstens einen Fördereinrichtung (50) ausgebildet sind.

3. Vorrichtung nach Anspruch 1 oder 2, **dadurch gekennzeichnet, dass** die Mittel zur definierten Verteilung des Medium-Volumenstroms als Bestandteil des Verteilerraums (33, 34) ausgebildet sind.

4. Vorrichtung nach einem der Ansprüche 1 bis 3, **dadurch gekennzeichnet, dass** die wenigstens eine Fördereinrichtung (50) als Querstrom-Fördereinrichtung ausgebildet ist, die sich entlang des Eintrittsbereichs (35, 36) des Verteilerraums (33, 34) erstreckt und/oder dass die Fördereinrichtung (50) als Radiallüfter ausgebildet ist.

5. Vorrichtung nach einem der Ansprüche 1 bis 4, **dadurch gekennzeichnet, dass** im Eintrittsbereich (35, 36) des Verteilerraums (33, 34) zur definierten Verteilung des Medium-Volumenstroms ein oder mehrere Verteilerelement(e) (37) vorgesehen ist/sind.

6. Vorrichtung nach Anspruch 5, **dadurch gekennzeichnet, dass** wenigstens ein Verteilerelement (37) zur Richtungsweisung eines Teilstroms des Medium-Volumenstroms wenigstens eine zumindest teilweise gekrümmte Leitfläche (38) aufweist.

7. Vorrichtung nach Anspruch 5 oder 6, **dadurch gekennzeichnet, dass** mehrere Verteilerelemente (37) vorgesehen sind, dass die in den Eintrittsbereich (35) des Verteilerraums (33) hineinragenden Enden (37a) der Verteilerelemente (37) von der Eintrittsöffnung (41) in den Eintrittsbereich (35) hin zu einer gegenüberliegenden Begrenzungswand (65) des Eintrittsbereichs (35) eine zunehmende Höhe aufweisen.

8. Vorrichtung nach Anspruch 7, **dadurch gekennzeichnet, dass** der Winkel (W5) zwischen einer gedachten Linie (GL) entlang der in den Eintrittsbereich (35) hineinragenden Enden (37a) der Verteilerelemente (37) und der Waagerechten (H1) 0 bis 30 Grad, vorzugsweise 3 bis 15 Grad, insbesondere 8 Grad, beträgt.

9. Vorrichtung nach einem der Ansprüche 1 bis 8, **dadurch gekennzeichnet, dass** der Verteilerraum (33, 34) an sich in einer Weise ausgebildet ist, dass das Medium mit einer definierten Strömungscharakteristik in dem vorgegebenen Bereich in die Brennstoffzelle(n) eintreten kann und dass der Verteilerraum (33, 34) von seinem Eintrittsbereich (35, 36) aus gesehen hin zu dessen gegenüberliegenden Ende (39) eine sich verjüngende, insbesondere eine zumindest teilweise kurvenförmig verlaufende, Kontur aufweist.

10. Vorrichtung nach einem der Ansprüche 1 bis 9, **dadurch gekennzeichnet, dass** der Verteilerraum (33, 34) durch eine Eintrittsöffnung (41), eine Übergangsöffnung (42) für den Übertritt des Mediums in die Brennstoffzelle(n), ein erstes Wandelement (43) sowie ein zweites Wandelement (44) begrenzt ist, wobei sich die Wandelemente (43, 44) von der Eintrittsöffnung (41) zur Übergangsöffnung (42) erstrecken.

11. Vorrichtung nach einem der Ansprüche 1 bis 9, **dadurch gekennzeichnet, dass** der Verteilerraum (33, 34) durch eine Eintrittsöffnung (41), einen sich daran anschließenden Eintrittsbereich (35), eine Übergangsöffnung (42) für den Übertritt des Mediums in die Brennstoffzelle(n), ein erstes Wandelement (43) sowie ein zweites Wandelement (44) begrenzt ist, wobei sich die Wandelemente (43, 44) von dem Eintrittsbereich (35) zur Übergangsöffnung (42) erstrecken.

12. Vorrichtung nach Anspruch 10 oder 11, **dadurch gekennzeichnet, dass** das erste Wandelement (43) und/oder das zweite Wandelement (44) zumindest bereichsweise einen gekrümmten Verlauf aufweisen und dass der gekrümmte Verlauf des ersten und/oder zweiten Wandelements (43, 44) durch wenigstens einen Krümmungsradius (K1, K2, K3) gebildet wird.

13. Vorrichtung nach einem der Ansprüche 10 bis 12, **dadurch gekennzeichnet, dass** im Übergangsbereich (45) vom ersten Wandelement (43) zur Übergangsöffnung (42) der Winkel (W1) zwischen der Übergangsöffnung (42) und der Tangente (T1) des ersten Wandelements (43) 20 bis 90 Grad beträgt.

14. Vorrichtung nach einem der Ansprüche 10 bis 13, **dadurch gekennzeichnet, dass** im Übergangsbereich (46) von der Eintrittsöffnung (41) zum ersten Wandelement (43) und/oder vom Eintrittsbereich (35) zum ersten Wandelement (43) der Winkel (W2) zwischen der Tangente (T2) des ersten Wandelements (43) und der Waagerechten (H1) 0 bis 40 Grad beträgt.

15. Vorrichtung nach einem der Ansprüche 10 bis 14, **dadurch gekennzeichnet, dass** im Übergangsbereich (47) vom zweiten Wandelement (44) zur Übergangsöffnung (42) der Winkel (W3) zwischen der Tangente (T3) des zweiten Wandelements (44) und der Senkrechten (H2) 0 bis 90 Grad beträgt.

16. Vorrichtung nach einem der Ansprüche 10 bis 15, **dadurch gekennzeichnet, dass** im Übergangsbereich (48) von der Eintrittsöffnung (41) zum zweiten Wandelement (44) und/oder vom Eintrittsbereich (35) zum zweiten Wandelement (44) der Winkel (W4) zwischen der Tangente (T4) des zweiten Wandelements (44) und der Senkrechten (H2) 5 bis 90 Grad beträgt.

17. Vorrichtung nach einem der Ansprüche 1 bis 16, **dadurch gekennzeichnet, dass** in dem Verteilerraum (33, 34) wenigstens eine Trennplatte (60) vorgesehen ist, die innerhalb des Verteilerraums (33, 34) zumindest bereichsweise zwei oder mehr Strömungskanäle (61) ausbildet.

18. Vorrichtung nach einem der Ansprüche 1 bis 17, **dadurch gekennzeichnet, dass** wenigstens eine Fördereinrichtung (50) in ihrer Förderrichtung und/oder in ihrer Fördermenge variabel ausgebildet ist.

19. Vorrichtung nach einem der Ansprüche 1 bis 18, **dadurch gekennzeichnet, dass** wenigstens eine Fördereinrichtung (50) mit einer Steuereinrichtung verbunden ist.

20. Brennstoffzellensystem, aufweisend wenigstens eine Brennstoffzelle mit wenigstens einer Zufuhr für einen Mediumzustrom und mit wenigstens einer Abfuhr für einen Mediumabstrom, **dadurch gekennzeichnet, dass** in der Zufuhr und/oder der Abfuhr wenigstens eine Vorrichtung (30) gemäß einem der Ansprüche 1 bis 19 vorgesehen ist.

21. Brennstoffzellensystem nach Anspruch 20, **dadurch gekennzeichnet, dass** sowohl in der Zufuhr als auch in der Abfuhr eine Vorrichtung (30) nach einem der Ansprüche 1 bis 19 vorgesehen ist und dass je nach Aktivierung und Förderrichtung der Fördereinrichtungen (50) eine der Vorrichtungen zum Beströmen der Brennstoffzelle(n) zum Zuführen des Medium-Volumenstroms in die Brennstoffzelle(n) und die andere Vorrichtung zum Abführen des Medium-Volumenstroms aus der/den Brennstoffzelle(n) ausgebildet ist.

22. Brennstoffzellensystem nach Anspruch 21, **dadurch gekennzeichnet, dass** die beiden Vorrichtungen (30) bezüglich des Mittelpunkts (M) der Brennstoffzelle(n) punktsymmetrisch angeordnet sind.

23. Brennstoffzellensystem nach einem der Ansprüche 20 bis 22, **dadurch gekennzeichnet, dass** dieses wenigstens einen Brennstoffzellenstack (11, 12) aus zwei oder mehr hintereinander angeordneten Brennstoffzellen aufweist und dass der Verteilerraum (33, 34) der wenigstens einen Vorrichtung (30) zum Beströmen der Brennstoffzellen unmittelbar mit einem definierten Bereich des Brennstoffzellenstacks (11, 12), insbesondere in dessen Längsausdehnung (L), in Kontakt steht.
